# EUROPEAN PATENT APPLICATION

(11) **EP 4 212 068 A1**
(43) Date of publication of application: **19.07.2023**
(21) Application number: 21866888.7
(22) Date of filing: 10.09.2021
(51) Int. Cl.: A47C 7/72, B09B 5/00, B64D 11/06, H01M 10/052, H01M 10/0585, H01M 10/54, B60N 2/90, A47C 27/14, H01M 50/183, H01M 50/20

(54) **METHOD FOR RECYCLING LITHIUM ION CELLS, RECYCLING EQUIPMENT, SEAT FOR CONVEYANCE VEHICLE, AND METHOD FOR MANUFACTURING SAME**

(30) Priority: 10.09.2020 JP 2020151835; 14.09.2020 JP 2020153730; 17.09.2020 JP 2020156072
(71) Applicant: APB Corporation, Echizen, Fukui 915-0043 (JP)
(72) Inventor: HORIE Hideaki, Fukui 915-0043 (JP); SHINDO Yasuhiro, Kyoto-shi, Kyoto 605-0995 (JP); NAKASHIMA Yusuke, Kyoto-shi, Kyoto 605-0995 (JP); KUSANO Ryosuke, Kyoto-shi, Kyoto 605-0995 (JP); SUZUKI Kaho, Kyoto-shi, Kyoto 605-0995 (JP)
(74) Representative: Wimmer, Hubert
(86) International application number: PCT/JP2021/033428
(87) International publication number: WO 2022/054931

(57) **Abstract**

This invention has an objective to increase the collected amounts of lithium contained in a lithium-ion battery. A recycling method for a lithium-ion battery comprising: a first discharging step S102, which increases an amount of lithium included in a cathode active material by discharging the lithium-ion battery via a load with a first resistance value; a second discharging step S104, which further increases the amount of lithium included in the cathode active material by discharging the lithium-ion battery via a load with a second resistance value lower than the first resistance value; and a collecting step S108, which collects the cathode active material from the lithium-ion battery after the second discharging step S104.

## Description

### Field of the Invention

This invention relates to a recycling method for a lithium-ion battery, a recycling facility, a vehicle seat, and a method of manufacturing a vehicle seat.

### Background Art

Conventionally, a lithium-ion battery is widely used in portable devices such as smartphones, hybrid cars, electric cars, and so on. Recently, a lithium-ion battery has also received more attention as a large-capacity battery for stationary power supply at offices and power stations. Such a lithium-ion battery includes various reusable substances. Therefore, various methods to collect those various reusable substances from a used lithium-ion battery have been proposed. For example, in Patent reference 1, the charge remaining in the lithium-ion battery is discharged by immersing the lithium-ion battery in a conductive liquid containing an electrolyte. Then the lithium ions dispersed in the lithium-ion battery are concentrated in the cathode active material to maximize the collected amount of lithium.

### Citation List

### Patent Literature

[Patent Reference 1] Japanese Unexamined Patent Application Publication No. 2012-074247
[Patent Reference 2] Publication of Japanese Patent No. 6389454
[Patent Reference 3] Japanese Unexamined Patent Application Publication No. 2008-284946
[Patent Reference 4] Japanese Unexamined Patent Application Publication No. 2010-083191
[Patent Reference 5] Japanese Unexamined Patent Application Publication No. 2015-071754
[Patent Reference 6] Japanese Unexamined Patent Application Publication No. 2012-195073
[Patent Reference 7] Japanese Unexamined Patent Application Publication No. 2016-186118

### BRIEF SUMMARY OF THE INVENTION

### Problems that Invention is to Solve

However, occasionally lithium included in a lithium-ion battery wasn't collected enough, even by making use of the method shown in Patent Reference 1. The present invention has been made in view of the above-mentioned problems and has an objective to increase the collected amounts of lithium contained in a lithium-ion battery.

### Means to solve the Problems

One variation of a recycling method for a lithium-ion battery comprises a first discharging step, which increases an amount of lithium included in a cathode active material by discharging the lithium-ion battery via a load with a first resistance value; a second discharging step, which further increases the amount of lithium included in the cathode active material by discharging the lithium-ion battery via a load with a second resistance value lower than the first resistance value; and a collecting step, which collects the cathode active material from the lithium-ion battery after the second discharging step.

Even a used lithium-ion battery sometimes has a large voltage in the initial stage of discharging, therefore, the current value can be a lot. As a result of this, a spark sometimes will be generated. Since the lithium-ion battery is discharged via a load with a first resistance value, which is comparatively high, in the first discharging step. This can increase the amount of lithium included in the cathode active material to some extent while preventing the current value from going too large. The voltage of the lithium-ion battery can be somewhat lower by the discharge in the first discharging step. Next, since the lithium-ion battery has further discharged via a load with a second resistance value, which is lower than the first resistance value. This can further increase the amount of lithium included in the cathode active material to some extent. Due to this, it is possible to increase the collected amounts of lithium contained in a lithium-ion battery. Also, since the voltage of the lithium-ion battery has already become lower to some extent in the first discharging step, even if the lithium-ion battery is discharged via the second load lower than the first load, it can still prevent the current value from going too large. As a result of this, any spark will not be generated.

Herein, it may be possible that a first load with a first resistance value is used in the first discharging step, and a second load with a second resistance value, which is lower than the first resistance value, is used in the second discharging step.

Furthermore, the lithium-ion battery is discharged while the first load and the second load are connected to the lithium-ion battery parallelly during a switch from the first discharging step to the second discharging step.

If the first load and the lithium-ion battery are disconnected electrically during the switch from the first discharging step to the second discharging step, the voltage of the lithium-ion battery could increase once again since the discharge of the lithium-ion battery is interrupted. If the second load with a low resistance value and the lithium-ion battery are connected electrically under this condition, the current value may become excessively large. On the other hand, during the switch from the first discharging step to the second discharging step, the lithium-ion battery is discharged while connecting the first load and the second load to the lithium-ion battery parallelly. With this configuration, since the discharge of the lithium-ion battery is not disconnected, the voltage of the lithium-ion battery does not rise again. Therefore, this prevents the current value from becoming excessively large.

Also, it may be possible that the load is a variable resistance load, and a resistance value of the variable resistance load is adjusted to lower the resistance value of the variable resistance load in the second discharging step than the resistance value of the variable resistance load in the first discharging step.

As mentioned above, in a case when the variable resistance load is applied during the switch from the first discharging step to the second discharging step, the resistance value will not continuously drop, and the discharge of the lithium-ion battery will never be disturbed. As a result of this, the voltage of the lithium-ion battery will not rise again. This can prevent the current value from going too large.

One variation of a recycling facility of a lithium-ion battery comprises a discharging device, which is operable to carry out a first discharging step, which increases an amount of lithium included in a cathode active material by discharging the lithium-ion battery via a load with a first resistance value, and which is operable to carry out a second discharging step, which further increases the amount of lithium included in the cathode active material by discharging the lithium-ion battery via a load with a second resistance value lower than the first resistance value; and a collecting device to collect the cathode active material from the lithium-ion battery.

Furthermore, the discharging device comprises a first load with a first resistance value used in the first discharging step and a second load with a second resistance value, which is lower than the first resistance value, used in the second discharging step.

Furthermore, the discharging device is configured to discharge the lithium-ion battery while the first load and the second load are connected to the lithium-ion battery parallelly during a switch from the first discharging step to the second discharging step.

Furthermore, the load is a variable resistance load; and the discharging device comprises a control unit, which is configured to adjust the resistance value of the variable resistance load to lower the resistance value of the variable resistance load in the second discharging step than the resistance value of the variable resistance load in the first discharging step.

### Effects of the Invention

According to this invention, it is possible to increase the collected amounts of lithium contained in a lithium-ion battery.

### Brief description of Drawings

FIG. 1 is a block diagram schematically showing a recycling facility of a lithium-ion battery according to a first embodiment.
FIG. 2 is a block diagram showing a discharging device at the recycling facility.
FIG. 3 is a flowchart showing a recycling method of the recycling facility.
FIG. 4 is a graph showing a load resistance value of the discharging device.
FIG. 5 is a block diagram schematically showing a constitution of a discharging device according to a second embodiment.
FIG. 6 is a graph showing a load resistance value of the discharging device.
FIG. 7 is a block diagram schematically showing a constitution of a discharging device according to a third embodiment.
FIG. 8 is a block diagram schematically showing a constitution of a discharging device according to a fourth embodiment.
FIG. 9 is a block diagram schematically showing a constitution of a discharging device according to a fifth embodiment.
FIG. 10 is a block diagram schematically showing a constitution of a discharging device according to a sixth embodiment.
FIG. 11 is a cross-sectional view from the side schematically showing a vehicle seat according to a first variation.
FIG. 12 is a perspective view schematically showing a constitution of a cushion pad of the vehicle seat.
FIG. 13 is a cross-sectional view schematically showing an enlarged constitution of a lithium-ion battery module equipped with the vehicle seat.
FIG. 14 is a cross-sectional view schematically showing a further enlarged part of the lithium-ion battery module equipped with the vehicle seat.
FIG. 15 is a flowchart showing a method of manufacturing the vehicle seat.
FIG. 16 is a cross-sectional view schematically showing a foaming step of the cushion pad of the vehicle seat.
FIG. 17 is a cross-sectional view schematically showing a constitution of the cushion pad, from which a core is isolated, after the foaming step.
FIG. 18 is a cross-sectional view schematically showing a housing step of housing the lithium-ion battery into the cushion seat.
FIG. 19 is a cross-sectional view schematically showing a constitution of a vehicle seat according to a second variation.
FIG. 20 is a cross-sectional view schematically showing a constitution of a vehicle seat according to a third variation.
FIG. 21 is a cross-sectional view schematically showing a constitution of a vehicle seat according to a fourth variation.
FIG. 22 is a cross-sectional view schematically showing a constitution of a vehicle seat according to a fifth variation.
FIG. 23 is a flowchart showing a method of manufacturing for a vehicle seat according to the fifth variation.
FIG. 24 is a cross-sectional view schematically showing an example of a lithium-ion battery that is used in a production method for a recyclable electrode active material for a lithium-ion battery according to this invention.
FIG. 25A is a perspective view schematically showing a first electrode constituting a charge storage element shown in FIG. 1.
FIG. 25B is a perspective view schematically showing a second electrode constituting a charge storage element shown in FIG. 1.
FIG. 26 is a cross-sectional view schematically showing an example of the isolation step.
FIG. 27 is a cross-sectional view schematically showing another example of the isolation step.
FIG. 28 is a cross-sectional view schematically showing still another example of the isolation step.
FIG. 29 is a schematic view showing an example of a method of separating a first electrode active material from a recyclable sheet-shaped electrode member for a lithium-ion battery.
FIG. 30 is a cross-sectional view schematically showing an example of an isolation step in a production method for a recyclable electrode sheet for a lithium-ion battery.

### Description of Embodiments

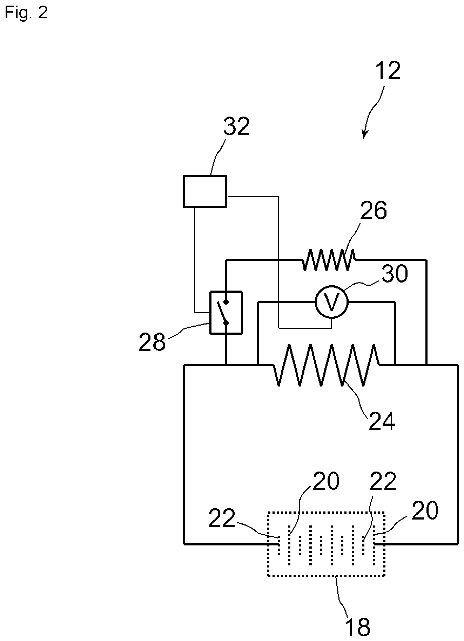

The discharging device 12 is operable to carry out a first discharging step, which increases the amount of lithium included in a cathode active material by discharging a lithium-ion battery 18 via a load with a first resistance value, and a second discharging step, which further increases the amount of lithium included in the cathode active material more by discharging the lithium-ion battery 18 via a load with a second resistance value lower than the first resistance value. Specifically, as shown in FIG. 2, the discharging device comprises a first load 24 with a first resistance value in the first discharging step, and a second load 26 with a second resistance value, which is smaller than the first resistance value, is used in the second discharging step.

The first load 24 is such as a resistor. For example, the first resistance value range is from 1k to 1000kΩ. The second load 26 is also such as a resistor. For example, the second resistance value range is from 0.001 to 0.5Ω. Herein, as long as the second resistance value range is within said range, the second load 26 can be a conductor such as a wiring line and a print wire instead of a resistor.

Furthermore, the discharging device 12 comprises a switch 28, which turns ON/OFF the connection between the second load 26 and the lithium-ion battery 18, and a voltmeter 30, which detects the voltage of the lithium-ion battery 18. When the switch 28 turns off, only the first load 24 is connected to the lithium-ion battery 18. The first discharging step is carried out with this connection. And when the switch 28 turns on, the second load 26 is connected to the lithium-ion battery 18. The second discharging step is carried out with this connection. In addition, during a switch from the first discharging step to the second discharging step, the discharging device 12 is configured to discharge the lithium-ion battery 18 while the first load 24 and the second load 26 are connected to the lithium-ion battery 18 in parallel. In this first embodiment, during the second discharging step, after having changed from the first discharging step to the second discharging step, both the first load 24 and the second load 26 are connected to the lithium-ion battery 18. Herein, the total resistance value of the first load 24 and the second load 26, which are connected to the lithium-ion battery 18 in parallel, is close to the resistance value of only the second load 26 and is within the second resistance value range. The total resistance value of the first load 24 and the second load 26 is a bit lower than only the second load 26.

Furthermore, the discharging device 12 comprises a control unit 32. The control unit 32 comprises a computer, digital logic circuit, relay logic circuit, and so on. This control unit 32 is electrically connected to the switch 28 and the voltmeter 30. The control unit 32 controls the switch 28 to turn off (first discharging step) when the voltage V of the lithium-ion battery 18 is more than a threshold VL, and controls the switch 28 to turn on (second discharging step) when the voltage V of the lithium-ion battery 18 is less than a threshold VL. Also, the control unit 32 is composed of sending a sound signal and/or a visual signal such as a lamp to notify the user when the second discharging step has passed more than a specific period. Furthermore, the discharging device 12 comprises an adaptor (not shown in the figure), which holds the lithium-ion battery 18, to keep the lithium-ion battery 18 electrically connected to the first load 24 and/or the second load 26.

The lithium-ion battery 18 is a layered battery. Specifically, the lithium-ion battery 18 is housed in a flexible container. A plurality of unit cells, in which a cathode 20, a separator (not shown in the figure), and an anode 22 are arranged alongside in this order, are stacked in series in this flexible container. Herein, in FIG. 2, the lithium-ion battery 18 is pictured as a long shape along the stacked direction of the unit cells.

However, each unit cell of the lithium-ion battery 18 has a plate-form structure. The lithium-ion battery 18 as a whole can have a shorter plate-form structure along the stacked direction than the structure shown in FIG. 2.

The cathode 20 has a configuration wherein the layered cathode active material portions are formed on a separator layer of a sheet-formed cathode current collector. The cathode current collector is such as a resin collector of a conductive resin or a resin collector, which is a mixture of a non-conductive polymeric material and a conductive filler. The non-conductive polymeric material is polyolefin such as polyethylene, polypropylene, etc. The conductive filler is a metal such as a carbon material like acetylene black and aluminum. And the cathode current collector can be a metallic current collector such as an aluminum foil.

The cathode active material portion is a mixture of cathode active material particles and an electrolytic solution. Herein, the cathode active material portion is in a semi-solid state named such as slurry, funicular, or pendula. The cathode active material particle is LiCoO₂, LiNiO₂, LiMnO₂, LiMn₂O₄, LiFePO₄, ternary material, and the like. The surface of the cathode active material particle can be coated with a coating resin. The cathode active material portion can include a conductive auxiliary agent. The conductive auxiliary agent is a metal such as a carbon material like acetylene black and aluminum. Herein, the coating resin coating the cathode active material particle can include a conductive filler as the same as the material of the conductive auxiliary agent. The cathode active material portion can include a binder. The binder is polyvinylidene fluoride, and so on. The electrolytic solution contains an electrolyte and a nonaqueous solvent. The electrolyte is LiPF₆, LiBF₄, LiSbF₆, LiAsF₆, LiClO₄, LiN(CF₃SO₂)₂, LiN(C₂F₅SO₂)₂, LiC(CF₃SO₂)₃ and the like. The nonaqueous solvent is a lactone compound, cyclic or chained carbonic acid ester, chained carboxylic acid ester, cyclic or chained ether, phosphoric acid ester, nitrile compounds, amide compounds, sulfones, sulfolane, etc or mixtures thereof.

The anode 22 has a configuration wherein the layered anode active material portions are formed on a separator layer of a sheet-formed anode current collector. The anode current collector is the same as the cathode current collector and is a resin current collector or a metal current collector like a copper foil. The anode active material portion is a mixture of cathode active material particles and an electrolytic solution. Herein, the anode active material portion is in a semi-solid state named such as slurry, funicular, or pendula. The anode active material particles are non-graphitizable carbon (hard carbon), carbon-based active materials such as graphite, metals, alloys, or oxides. The surfaces of the anode active material particles may also be coated with a coating resin. The anode active material portion may also contain a conductive auxiliary agent similar to the conductive auxiliary agent, which is contained in the cathode active material portion. The coating resin that coats the anode active material particles may also contain a conductive filler made of the same material as the conductive auxiliary agent. Also, the anode active material portion may contain a binder. The binder is, for example, a waterborne polymer such as a styrene-butadiene copolymer. The electrolytic solution contained in the anode active material portion is the same as the electrolytic solution contained in the cathode active material portion.

The separator is a microporous membrane of polyolefin such as polyethylene or polypropylene. The periphery of the separator is held by a frame (not shown in the figure). The cathode current collector and the anode current collector are placed to hold the frame. The cathode active material portion is housed in a space surrounded by the cathode current collector, the separator, and the frame. The anode active material portion is housed in a space surrounded by the anode current collector, the separator, and the frame.

The disassembling device 14 comprises a cutter, which cuts and opens a container of the lithium-ion battery 18, and a drawing device, which takes out unit cells from the containers. The collecting device 16 comprises a peeling device, which holds the frame of the unit cell and peels the cathode current collector and the anode current collector from both sides of the frame, and a scraping device, which scrapes the cathode active material portion and the anode active material portion from the separator. Herein, the collecting device 16 may comprise a heating device, which heats a fixed part between the cathode current collector and the frame, and between the anode current collector and the frame, to ease the peeling of the cathode current collector and the anode current collector. The collecting device 16 may also comprise a liquid supply device, which sprays liquid onto the cathode active material portion and/or to the anode active material portion of both sides of the separator, and separates the cathode active material portion and/or the anode active material portion from the separator.

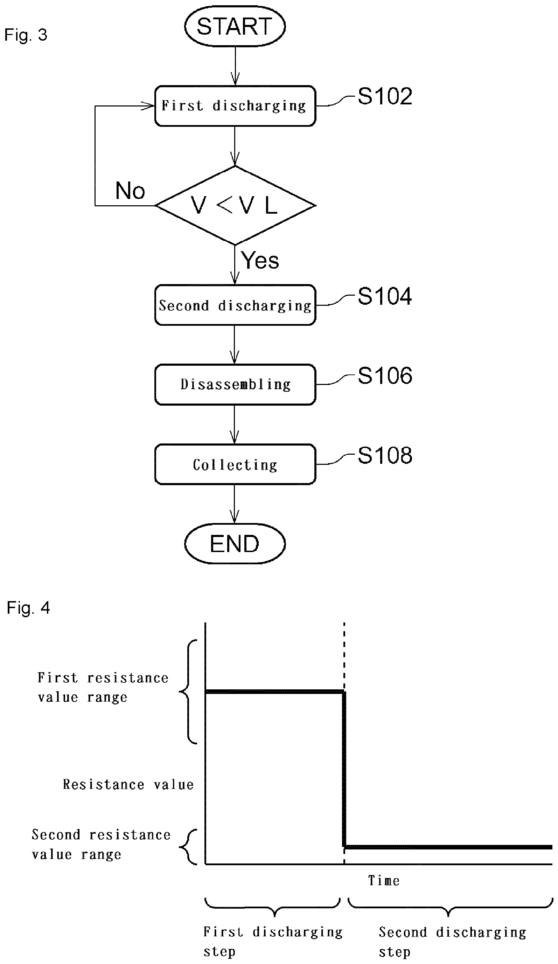

Next, a recycling method for a lithium-ion battery at a recycling facility 10 of a lithium-ion battery will be explained according to a flowchart shown in FIG. 3. First, the lithium-ion battery 18 is set to the discharging device 12. The control unit 32 detects voltage V of the lithium-ion battery 18 by the voltmeter 30. When the voltage V is more than the threshold VL, the control unit 32 turns the switch 28 off and discharges the lithium-ion battery 18 (S102: first discharging step). Due to this, the cathode 20 and the anode 22 of the lithium-ion battery 18 are connected to one another via the first load 24, having the first resistance value range. As shown in FIG. 4, the first resistance value range is comparatively high. On the other hand, the cathode 20 and the anode 22 of the lithium-ion battery 18 are not connected to one another via the second load 26, having the second resistance value range, which is comparatively low. Therefore, a certain volume of lithium-ions included in the anode active material portion moves to the cathode active material portion of the cathode 20 while preventing the current value from becoming too large. This makes the amount of lithium-ion included in the cathode active material portion increase. This also makes the voltage of the lithium-ion battery decrease to some extent in the first discharging step S102.

In a state where the voltage V reaches less than the threshold VL, the control unit 32 turns the switch 28 on and discharges the lithium-ion battery 18 (S104: second discharging step). As shown in FIG. 4, the cathode 20 and the anode 22 are connected via the second load 26, having the second resistance value range, which is less than the first resistance value range to further discharge the lithium-ion battery 18. Therefore, the rest of lithium-ions included in the anode active material portion moves to the cathode active material portion of the cathode 20. This makes the amount of lithium included in the cathode active material increase further. Therefore, the collected amount of lithium from the cathode active material portion of the cathode 20 can increase. Herein, although the first load 24 is connected to the battery 18 in the second discharging step S102, as mentioned above, the total resistance value of the first load 24 and the second load 26, which are parallelly connected to the lithium-ion battery 18, is within the second resistance value range and is a bit lower than only the second load 26. In addition, since the voltage of the lithium-ion battery 18 has reached less than the threshold VL due to the discharge in the first discharging step S102, the current value will not become excessively large, even if the cathode 20 and the anode 22 are connected via the second load 26, having the second resistance value range, which is less than the first resistance value range. As a result of this, any spark will not be generated.

Furthermore, if the first load 23 and the lithium-ion battery 18 are disconnected electrically during the switch from the first discharging step S102 to the second discharging step S104, the voltage of the lithium-ion battery 18 could increase once again since the discharge of the lithium-ion battery 18 is interrupted. If the second load 26 with a low resistance value and the lithium-ion battery 18 are connected electrically under this condition, the current value may become excessively large. On the other hand, in the first embodiment, during the switch from the first discharging step S102 to the second discharging step S104, battery 24 is discharged by connecting the first load 24 and the second load 26 to the lithium-ion battery 18 in parallel. In other words, since the electrical connection between the first load 24 and the lithium-ion battery 18 continues, the discharge of the lithium-ion battery 18 will not be disconnected. As a result, the voltage of the lithium-ion battery 18 does not rise again. Therefore, this prevents the current value from becoming excessively large. Herein, in the first embodiment, the first load 24 and the second load 26 are connected to the lithium-ion battery 18 in parallel not only during the switch from the first discharging step S102 to the second discharging step S104 but also during the second discharging step S104. However, for example, a switch, which can turn the connection between the first load 24 and the lithium-ion battery 18 on/off, could be further equipped. Then, the control unit 32 may turn the connection between the first load 24 and the lithium-ion battery 18 off after the switch to the second discharging step S104 and could make the lithium-ion battery 18 discharge via the second load 26 only.

Next, at disassembling device 14, the container of the lithium-ion battery 18 is cut and opened by a cutter, and the unit cell is taken out from the container by the drawing device (S106: disassembling step). Furthermore, at the collecting device 16, the cathode current collector and the anode current collector from both sides of the frame are peeled by the peeling device while holding the frame of the unit cell. The cathode active material portion and anode active material portion are scraped from both sides of the separator by the scraping device (S108: collecting step). Herein, the liquid supply device may spray liquid onto the cathode active material portion and/or to the anode active material portion of both sides of the separator and separates the cathode active material portion and/or the anode active material portion from the separator. The conductive auxiliary agent and/or the binder are decomposed and removed by heating (roasting) the separated cathode active material portion and/or the anode active material portion. Furthermore, the cathode active material particles having a lot of lithium can be collected by immersing the cathode active material portion in water. In addition, metal ion solution containing lithium and so on, can be collected by immersing the cathode active material portion into acidic aqueous solution such as sulfuric acid. Furthermore, metals such as lithium and so on, can be collected based on ion exchange, electrolysis, sedimentation separation, etc. Moreover, the anode active material particles can be collected by immersing the anode active material portion in water or an acidic aqueous solution.

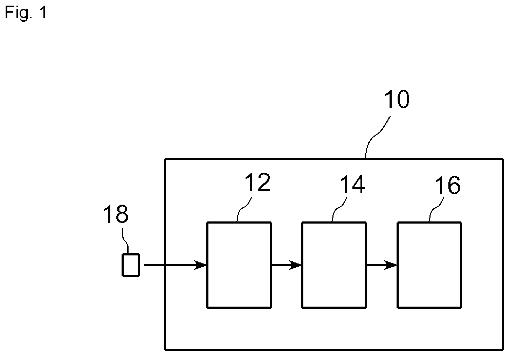

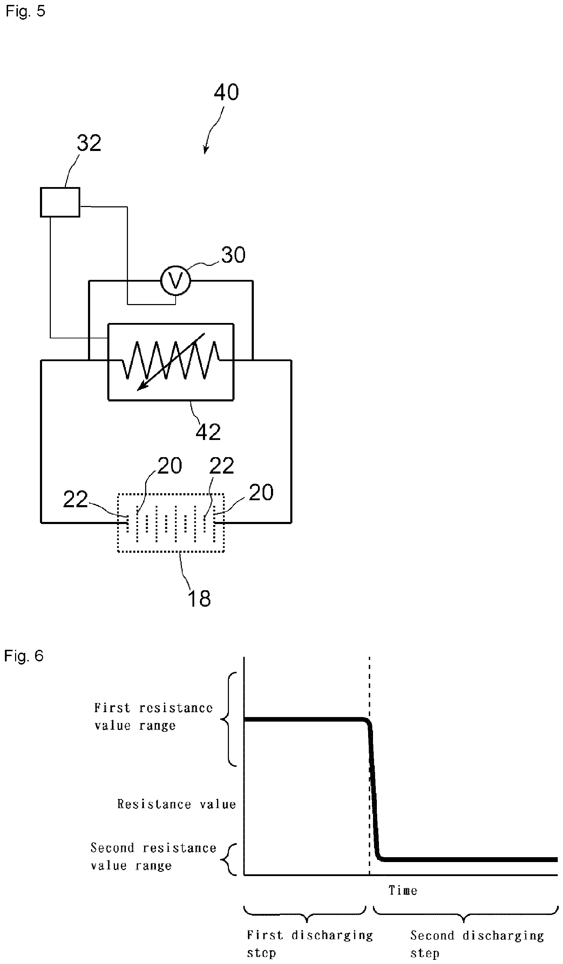

Next, the second embodiment according to this invention, will be explained. As shown in FIG. 5, the discharging device 40 according to the second embodiment comprises a variable resistance load 42 instead of the first load 24 and the second load 26 according to the first embodiment. Herein, the switch 28 is not required. In addition, the control unit 32 is electrically connected to the variable resistance load 42 and adjusts the variable resistance load 42 to lower the resistance value of the variable resistance load 42 in the second discharging step S104 than the resistance value of the variable resistance load 42 in the first discharging step S102. Since other components are the same as the first embodiment, the same reference numbers mentioned in FIG. 1~3 are given to those components, and the detailed explanation is omitted.

As shown in FIG. 6, in the first discharging step S102, the control unit 32 controls the resistance value of the variable resistance load 42 to the same value as the resistance value of the first load 24 mentioned in the first embodiment. Furthermore, in the second discharging step S104, the control unit 32 controls the resistance value of the variable resistance load 42 to the same value as the resistance value of the first load 24 mentioned in the first embodiment. As mentioned above, in a case when the variable resistance load 42 is applied during the switch from the first discharging step S102 to the second discharging step S104, the resistance value will not continuously drop, and the discharge of the lithium-ion battery 18 will never be interrupted. As a result of this, the voltage of the lithium-ion battery 18 will not rise again. Therefore, this can prevent the current value from becoming excessively large.

Herein, the adjustment of the resistance value of the variable resistance load 42 in the first discharging step S102 is shown in FIG. 6, which is the same as the first load 24 mentioned in the first embodiment. However, for example, the variable resistance load 42 can be adjusted in the first discharging step S102 to decrease the resistance value contentiously according to the decrease of the voltage V of the lithium-ion battery 18 detected by the voltmeter 30. This makes the period required for the discharge in the first discharging step S102 shortened. Also, other adjustments can be applied to the variable resistance load 42 in the first discharging step S102 and/or the second discharging step S104.

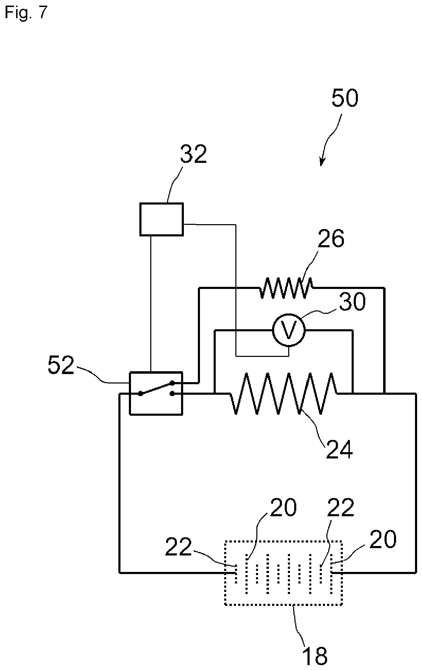

Next, the third embodiment according to this invention will be explained. As shown in FIG. 7, the discharging device 50, according to the third embodiment, comprises a switch 52, which selectively connects either one of the first load 24 or the second load 26 to the lithium-ion battery 18 instead of a switch 28 of the discharging device 12 mentioned in the first embodiment. Since other components are the same in the first embodiment, the same reference numbers mentioned in FIG. 1~4 are used for those components and the detailed explanation is omitted. The discharge of the lithium-ion battery 18 is temporarily stopped during the switch from the first discharging step S102 to the second discharging step S104. However, since the switch can be completed shortly, the discharging device 50 can prevent the voltage of the lithium-ion battery 18 from rising again or can suppress the voltage of the lithium-ion battery 18 to the level with no practical problem.

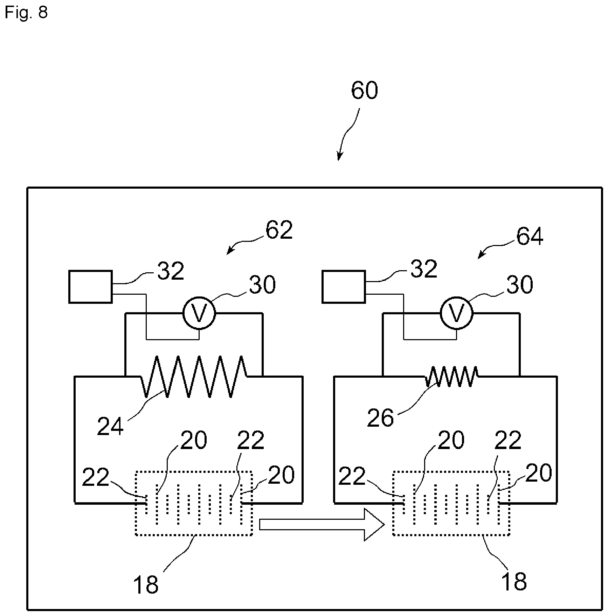

Next, the fourth embodiment according to this invention will be explained. As shown in FIG. 8, the discharging device 60, according to the fourth embodiment, comprises a first discharging device 62, having the first load 24 and a second discharging device 64, having the second load 26. The first discharging device 62, carries out the first discharging step S102, and the second discharging device 64, carries out the second discharging step S104. Since other components are the same in the first embodiment, the same reference numbers mentioned in FIG. 1~4 are used for those components and the detailed explanation is omitted. The discharging device 60 is accompanied by the movement of the lithium-ion battery 18 during the switch from the first discharging step S102 to the second discharging step S104. Due to this, the discharge of the lithium-ion battery 18 is temporarily stopped. However, since the conditions such as the type of the lithium-ion battery 18, the discharge period in the first discharging step S102 and the resistance value of the first load 23 of the first discharging device 62 can be adjustable, the discharging device 60 can prevent the voltage of the lithium-ion battery 18 from rising again or can suppress the voltage of the lithium-ion battery 18 to the level with no practical problem.

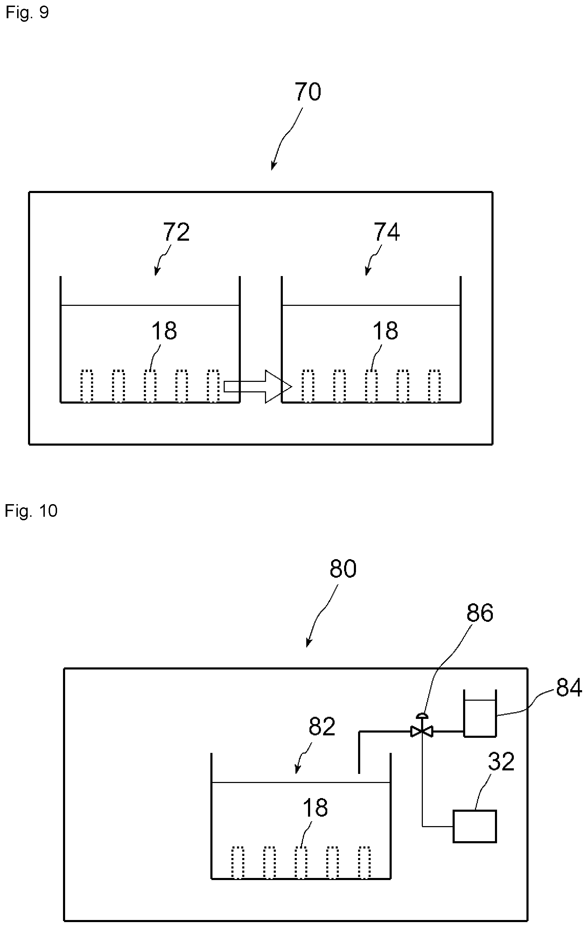

Next, the fifth embodiment according to this invention will be explained. As shown in FIG. 9, the discharging device 70, according to the fifth embodiment comprises a first discharge tank 72 and a second discharge tank 74, instead of the first discharging device 62 and the second discharging device 64 mentioned in the fourth embodiment. The first discharge tank 72, carries out the first discharging step S102 and the second discharge tank 74, carries out the second discharging step S104. Since other components are the same in the first embodiment, the same reference numbers mentioned in FIG. 1,3 and 4 are used for those components and the detailed explanation is omitted. The discharge liquid with the first resistance value range is filled in the first discharge tank 72, and the discharge liquid with the second resistance value range, is filled in the second discharge tank 74. Sodium chloride, sulfuric acid, and so on are included in the discharge liquid. The liquid in the first discharge tank 72 and the liquid in the second discharge tank 74 are different in terms with the concentration of the electrolytes and/or the variety. The first discharge tank 72 and the second discharge tank 74 hold and contain a plurality of lithium-ion batteries 18 to make the discharge liquid touch a cathode tub (not shown in the figure) connected to the cathode 20 of the lithium-ion battery 18 and to make the discharge liquid touch an anode tub (not shown in the figure) connected to the anode 22 of the lithium-ion battery 18. The discharge of the lithium-ion battery 18 is temporarily stopped during the switch from the first discharging step S102 to the second discharging step S104. However, since the conditions such as the type of the lithium-ion battery 18, the discharge period in the first discharging step S102 and the resistance value of the first discharge liquid in the first discharge tank 72 can be adjustable, the discharging device 70 can prevent the voltage of the lithium-ion battery 18 from rising again or can suppress the voltage of the lithium-ion battery 18 to the level with no practical problem. Furthermore, a plurality of lithium-ion batteries 18 can get discharged at one time, depending on a discharge tank.

Next, the sixth embodiment according to this invention will be explained. As shown in FIG. 10, the discharging device 80 according to the sixth embodiment, comprises a discharge tank 82, an electrolytic solution supply unit 84, and a control valve 86. The electrolytic solution supply unit 84 is filled with electrolytic solution including electrolytes. The control unit 32 is connected to the control valve 86. The control unit 32 adjusts the concentration of electrolytes contained in the discharge liquid of the discharge tank 82 by controlling the control valve 86 to make the resistance value of the discharge liquid in the discharge tank 82 to lower the resistance value of the second discharging step S104 than that in the first discharging step S102. Since other components are the same in the first embodiment, the same reference numbers mentioned in FIG. 1-3,5 and 6 are used for those components and the detailed explanation is omitted.

For example, as shown in FIG. 6 according to the second embodiment, the control unit 32 maintains the first discharging step S102 for a certain period by adjusting the resistance value of the electrolytic solution, which is the same as the resistance value of the first load 24 in the first embodiment. Also, the control unit 32 maintains the second discharging step S104 for a certain period of time by adjusting the resistance value of the electrolytic solution, which is the same as the resistance value of the second load 26 in the first embodiment. As mentioned above, in a case where one discharge tank 82 is used, the resistance value can be continuously decreased by adjusting the concentration of electrolytes contained in the discharge liquid during the switch from the first discharging step S102 to the second discharging step S104. Therefore, since the discharge of the lithium-ion battery 18 continues, the voltage of the lithium-ion battery 18 does not rise again. This can prevent the current value from becoming excessively large.

Herein, in FIG. 6, the resistance value of the variable resistance load 42 is controlled the same way as the resistance value of the first load 24 in the first discharging step S102. However, for example, the concentration of electrolytes in the discharge liquid may be controlled to make the resistance value decrease continuously. Due to this, the period of discharge in the first discharging step S102 can be shortened. Also, in the first discharging step S102 and/or the second discharging step S104, other adjustments can be applied to the concentration of electrolytes in the discharge liquid.

Furthermore, the discharge device 60 according to the fourth embodiment, comprises the first discharge device 62 and the second discharge device 64. The discharge device 70 according to the fifth embodiment, comprises the first discharge tank 72 and the second discharge tank 74. However, the discharge device may have a configuration in which these are combined. For example, the discharge device may comprise the first discharge device 62 and the second discharge tank 74. The discharge device also may comprise the first discharge tank 72 and the second discharge device 64. Furthermore, the discharge device 40, according to the second embodiment or the discharge tank 80, according to the sixth embodiment, can be applied in the first discharging step S102. The second discharge device 60 or the second discharge tank 74 can be applied in the second discharging step S104.

FIG. 2,5,7,8, according to the first to fourth embodiments show examples in which each discharge device discharges each lithium-ion battery 18. However, each discharge device may discharge a plurality of lithium-ion batteries at the same time. For example, the lithium-ion batteries shown in FIG. 2,5,7,8 may be installed in parallel in each discharge device. In this case, the first load, second load, switch, voltmeter, and variable load of each discharge device are commonly used for discharging multiple batteries. Furthermore, each discharge device may comprise the same number of first loads, second loads, switches, voltmeters, and variable loads as the number of the batteries, which are discharged simultaneously. Each discharge device may comprise less number of first loads, second loads, switches, voltmeters, and variable loads than the number of the batteries, which are discharged simultaneously. Said first loads, second loads, switches, voltmeters, and variable loads may be commonly used for discharging some batteries out of all the batteries, which are discharged simultaneously.

In the first to sixth embodiments, the cathode active material portion and the anode active material portion, are in a semi-solid state including electrolytic solution. However, the lithium-ion battery 18 may be an all-solid-state lithium-ion battery. In the unit cell of the all-solid-state lithium-ion battery, a solid electrolyte portion is placed between the cathode active material particles and the anode active material particles instead of the separator. The solid electrolyte portion is composed of a sulfide-based solid electrolyte or an oxide-based solid electrolyte containing lithium and having high conductivity. The cathode current collector is, for example, aluminum foil, and the anode current collector is a copper foil, as an example. Furthermore, the cathode active material portion and the anode active material portion are in a solid state, wherein solid electrolyte particles are mixed instead of the electrolytic solution. Herein, the cathode active material portion and the anode active material portion may contain the above-mentioned conductive auxiliary agent. The cathode active material portion and the anode active material portion may not contain the particles of the solid electrolytes. The particles of the cathode active material can be obtained by crushing the cathode active material portion of the all-solid-state lithium-ion battery. Herein, in a case when the particles of the cathode current collector are mixed, the particles of the cathode active material can be selected by a sieving step, and so on. The anode active material can be the same.

In the first to sixth embodiments, the lithium-ion battery 18 is layered. However, the lithium-ion battery 18 may be a non-bipolar stacked type or a bipolar stacked type. The lithium-ion battery 18 may be composed of only one unit cell. In addition, the electrode structure may be a wounded type. The shape of the outer container may be rectangular or cylindrical. Also, the outer container may also be a metal can.

### [Variations of a vehicle seat and a manufacturing method thereof]

Hereinafter, the variations of a vehicle seat and the manufacturing method thereof will be explained. This vehicle seat comprises a lithium-ion battery. This lithium-ion battery can be obtained through the above-mentioned recycling method or at a recycling facility of the lithium-ion battery. Such lithium-ion battery comprises a cathode active material layer including a cathode active material collected by the above-mentioned recycling method or at a recycling facility of the lithium-ion battery.

Conventionally, in terms of vehicles such as an airplane, electricity is supplied to the seat from the main battery of the vehicle via wires for the use of amusement devices such as displays installed in seats and various electrical devices, etc. On the other hand, electric wires can cause complications in supplying electricity to many seats. In addition, power supply for other equipment in the vehicle can sometimes be insufficient in supplying electricity to many seats. Due to this, there is a need to install a battery in each seat. As for this need, an aircraft seat equipped with a fuel cell is known (refer to Patent Reference 2). However, there is a problem that fuel cells have complications in supplying hydrogen and oxygen (air) and draining the generated water, etc. To solve this problem, a car seat equipped with a lithium-ion battery is known (refer to Patent References 3 and 4).

However, in a case when an external force acts on a lithium-ion battery and deforms it, the internal separator may be damaged, resulting in an abnormal heat generation. Therefore, to prevent the deformation of the seat from happening to the lithium-ion battery by seating, it was necessary to have a gap between the seat pads, which is deformed by seating, and the lithium-ion battery. Furthermore, it was necessary to have a gap around the lithium-ion battery to cool the lithium-ion battery. In addition, it was necessary to have a gap between the seat pad and the lithium-ion battery to not disturb the comfort of the seated person due to the lithium-ion battery. Due to this, there was a problem that the installation structure of the lithium-ion battery became complicated. Also, in order to improve sitting comfort, it is preferable to suppress the resonance frequency to a predetermined value or less (for example, 4 Hz or less) (refer to Patent Reference 5). However, in some cases, it was difficult to suppress the resonance frequency to a predetermined value or less due to the metallic current collector of the lithium-ion battery. This variation has been made in view of the above-mentioned problems and has an objective to provide a vehicle seat, which has a simple structure, and which is comfortable while having a battery.

One variation of a vehicle seat comprises a seat pad, which is made of foamed resin, to sustain a seated person elastically: and a lithium-ion battery module, wherein the lithium-ion battery module is flexible and comprises a lithium-ion battery having a cathode current collector with resin and an anode current collector with resin, and a resin exterior film covering the lithium-ion battery; wherein the seat pad contains a housing space to house the lithium-ion battery module inside; and wherein the lithium-ion battery module is housed in the housing space of the seat pad while being in contact with an inner surface of the housing space.

Since the lithium-ion battery module is housed in the housing space of the seat pad while being in contact with an inner surface of the housing space, this vehicle seat has a simpler structure than a structure having a gap between the lithium-ion battery module and the seat pad. Furthermore, since the lithium-ion battery comprises a cathode current collector with resin and an anode current collector with a resin, it is possible to suppress the resonance frequency to a low value.

It is preferable that a resonance frequency value of the seat pad with a built-in battery is 3.4 Hz or less, wherein the lithium-ion battery module is housed in the housing space of the seat pad.

Some people say that the frequency of vibration that people feel uncomfortable is around 6 Hz. Others say that the frequency of vibration that people find uncomfortable varies depending on the direction of the vibration. In this theory, the frequency of vertical vibration which people feel uncomfortable is around 5 Hz. Since the resonance frequency value of the seat pad with a built-in battery is suppressed to 3.4 Hz or less, both the vibration with a frequency of around 6 Hz and the vibration with a frequency of around 5 Hz are remarkably suppressed.

Herein, the above-mentioned lithium-ion battery module may be housed in the housing space of the seat pad so as to deform with a deformation of the seat pad by seating. Since the above-mentioned lithium-ion battery module is flexible, in a case when the module is deformed with the seat pad by seating, the separator inside the lithium-ion battery is less likely to be damaged. Therefore, extraordinary heat is less likely to occur. Since the above-mentioned lithium-ion battery module is flexible, the seated person is not disturbed and can feel comfortable.

In addition, the lithium-ion battery module is a sheet or a plate, and the housing space of the seat pad may be formed along a surface facing a seated person. Since the sheet-shaped or the plate-shaped lithium-ion battery module is placed along the surface facing the seated person, any local deformation of the lithium-ion battery by seating is prevented. The arrangement of this lithium-ion battery module also contributes to improving the comfort of the seated person.

Furthermore, both sides of the lithium-ion battery module may be in contact with the inner surface of the housing space.

In this case, the lithium-ion battery module is sandwiched and held by the seat pad so the structure can be simple.

An elastic auxiliary member, which is placed in one side of the lithium-ion battery module, may be further provided. As a result of this, a deformation of the lithium-ion battery module is mitigated.

Furthermore, a method of manufacturing a vehicle seat having a seat pad, which is made of foamed resin, to sustain a seated person elastically and a lithium-ion battery module, the method comprises a lithium-ion battery module preparation step of preparing a lithium-ion battery module, which is flexible and comprises a lithium-ion battery having a cathode current collector with resin and an anode current collector with resin, and a resin exterior film covering the lithium-ion battery, as the lithium-ion battery module; a foaming step of foaming the seat pad so as to form a housing space, which houses the lithium-ion battery module, inside the seat pad by placing an outer core corresponding to an external shape of the lithium-ion battery module in a mold; and a housing step of housing the lithium-ion battery module in the housing space of the seat pad while being in contact with an inner surface of the housing space.

With this manufacturing method, the vehicle seat, which has a comfortable and simple structure, can be easily produced while having a battery.

Furthermore, a method of manufacturing a vehicle seat having a seat pad, which is made of foamed resin, to sustain a seated person elastically and a lithium-ion battery module, the method comprises a lithium-ion battery module preparation step of preparing a lithium-ion battery module, which is flexible having a lithium-ion battery covering a cathode current collector with resin and an anode current collector with resin, and a resin exterior film covering the lithium-ion battery, as the lithium-ion battery module; and a foaming step of foaming the seat pad so as to form a housing space to house the lithium-ion battery module inside the seat pad, and so as to house the lithium-ion battery module in the housing space of the seat pad while contacting an inner surface of the housing space by placing the lithium-ion battery module in a mold.

With this manufacturing method, it is not necessary to use any cores. In addition, the foaming step also performs as the housing step. Therefore, with this manufacturing method, the vehicle seat, which has a comfortable and simple structure, can be further easily produced despite having a battery.

With this variation, the vehicle seat, which has a comfortable and simple structure, can be realized despite having a battery.

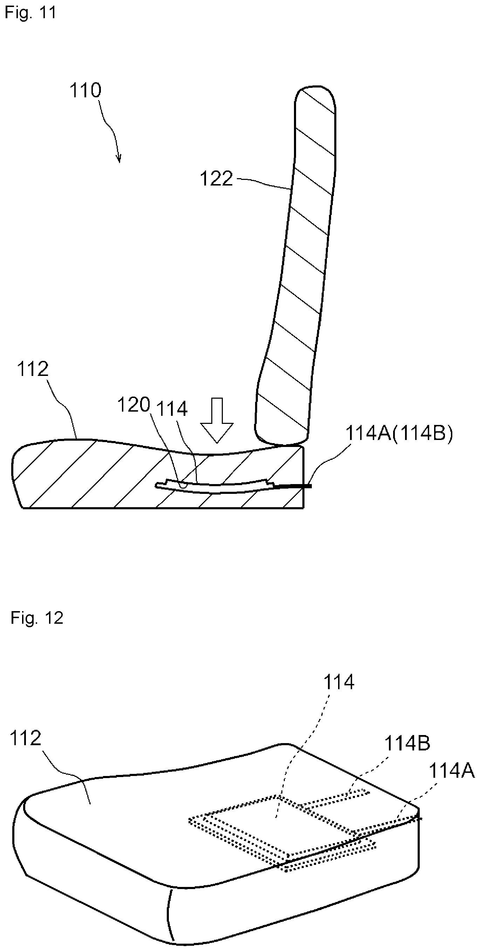

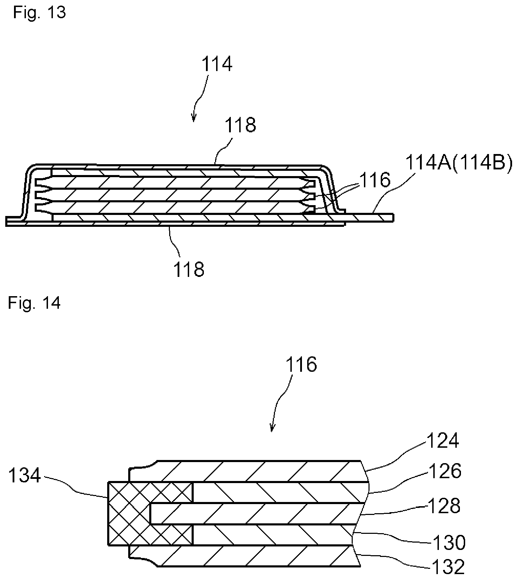

As shown in FIG. 11 and 12, one variation of a vehicle seat 110 according to this invention comprises a cushion pad (seat pad) 112, which is made of foamed resin, to sustain a seated person elastically: and a lithium-ion battery module 114. Herein, the vehicle seat 110 can be used as a passenger seat for airplanes and so on. The lithium-ion battery module 114 is used as an auxiliary power for the use of amusement devices such as displays installed in the seats and various electrical devices, etc. As shown in FIG. 13 and 14, the lithium-ion battery module 114 is flexible and comprises a lithium-ion battery 116 having a cathode current collector 124 with resin and an anode current collector 132 with resin, and a resin exterior film 118 covering the lithium-ion battery 116. The housing space 120 to house the lithium-ion battery module 114 is formed inside the seat pad 112, and the lithium-ion battery module 114 is housed in the housing space 120 of the seat pad 112 while being in contact with an inner surface of the housing space 120.

The cushion pad 112 plays a role as a seat pad for the seat portion of the vehicle seat 110. The housing space 120 is formed along the seat surface (the side facing the seated person) of the cushion pad 112. Herein, the vehicle seat 110 also comprises a back pad 122 as a seat pad in the backrest. The material for the cushion pad 112 or the back pad 122 is, for example, a flexible foamed resin such as polyurethane. The cushion pad 112 and the back pad 122, are covered with a skin material (not shown in the figure). Also, the cushion pad 112 or the back pad 122 are assembled to a certain frame (not shown in the figure) and the like.

The lithium-ion battery module 114 is a sheet or a plate and is housed in the housing space 120 of the cushion pad 112. Both sides of the lithium-ion battery module 114 are in contact with an inner surface of the housing space 120. The lithium-ion battery module 114 is housed in the housing space 120 of the cushion pad 112 so as to deform with the deformation of the cushion pad 112 by seating. Herein, the terminals 114A, 114B of the lithium-ion battery module 114 extend to the outside of cushion pad 112.

The lithium-ion battery 116 comprises the cathode current collector 124, cathode active material layer 126, separator 128, an anode active material layer 130, and anode current collector 132. These are layered in this order. In addition, the lithium-ion battery 116 holds the separator 128 by pinching the outer edge of the separator 128, which separates the cathode active material layer 126 and the anode active material layer 130, from both sides along the stacking direction. Also, the lithium-ion battery 116 has a frame member 134 surrounding the outer periphery of the cathode active material layer 126 and the anode active material layer 130. The outer edge of the cathode current collector 124 is fixed on one side of the frame member 134 so as to cover the cathode active material layer 126. The outer edge of the anode current collector 132 is fixed on the other side of the frame member 134 so as to cover the anode active material layer 130.

The cathode current collector 124 is such a resin collector of a conductive resin or a resin collector, which is a mixture of a non-conductive polymeric material and a conductive filler. The conductive resin is such as polyaniline, polypyrrole, polythiophene, polyacetylene, polyparaphenylene, polyphenylenevinylene, polyoxadiazole, and the like. The non-conductive polymeric material is such as polyethylene (PE; high density polyethylene (HDPE), low density polyethylene (LDPE), etc.), polypropylene (PP), polyethylene terephthalate (PET), polyethernitrile (PEN), polyimide (PI), polyamideimide (PAI), polyamide (PA), polytetrafluoroethylene (PTFE), styrene-butadiene rubber (SBR), polyacrylonitrile (PAN), polymethyl acrylate (PMA), polymethyl methacrylate (PMMA), polyvinyl chloride (PVC), polyvinylidene fluoride (PVdF), polystyrene (PS), and the like. The conductive filler is a metal and/or a conductive carbon. The metal is, for example, at least one metal selected from the group consisting of nickel, titanium, aluminum, copper, platinum, iron, chromium, tin, zinc, indium, antimony, and potassium, or an alloy or metal oxide containing these metals. The conductive carbon is, for example, at least one selected from the group consisting of Acetylene Black, Vulcan (registered trade name), Black Pearl (registered trade name), Carbon Nanofiber, Ketjen Black (registered trade name), Carbon Nanotube (CNT), Carbon Nanohorn, Carbon Nanoballoon, and Fullerene. The anode current collector 132 is a resin current collector similar to the cathode current collector 124.

The cathode active material portion 126 is a mixture of cathode active material particles and an electrolytic solution. Herein, the cathode active material portion 126 is in a semi-solid state named such as slurry, funicular, or pendula. The cathode active material particle is LiCoO₂, LiNiO₂, LiMnO₂, LiMn₂O₄, LiFePO₄, ternary material, and the like. The surface of the cathode active material particle can be coated with a coating resin. The cathode active material layer 126 can include a conductive auxiliary agent. The conductive auxiliary agent is a metal such as a carbon material like acetylene black and aluminum. Herein, the coating resin coating the cathode active material particle can include a conductive filler as the same as the material of the conductive auxiliary agent. The cathode active material portion 126 can include a binder. The binder is polyvinylidene fluoride, and so on. The electrolytic solution contains an electrolyte and a nonaqueous solvent. The electrolyte is LiPF₆, LiBF₄, LiSbF₆, LiAsF₆, LiClO₄, LiN(CF₃SO₂)₂, LiN(C₂F₅SO₂)₂, LiC(CF₃SO₂)₃ and the like. The nonaqueous solvent is a lactone compound, cyclic or chained carbonic acid ester, chained carboxylic acid ester, cyclic or chained ether, phosphoric acid ester, nitrile compounds, amide compounds, sulfones, sulfolane, etc or mixtures thereof. The cathode active material portion 126 is housed in a space surrounded by the cathode current collector 124, the separator 128 and the frame member 134.

The anode active material portion 130 is a mixture of cathode active material particles and an electrolytic solution. Herein, the anode active material portion 130 is in a semi-solid state named such as slurry, funicular, or pendula. The anode active material particles are non-graphitizable carbon (hard carbon), carbon-based active materials such as graphite, metals, alloys, or oxides. The surfaces of the anode active material particles may also be coated with a coating resin. The anode active material portion 130 may also contain a conductive auxiliary agent similar to the conductive auxiliary agent, which is contained in the cathode active material portion 126. The coating resin that coats the anode active material particles may also contain a conductive filler made of the same material as the conductive auxiliary agent. Also, the anode active material portion may contain a binder. The binder is, for example, a waterborne polymer such as a styrene-butadiene copolymer. The electrolytic solution contained in the anode active material portion 130 is the same as the electrolytic solution contained in the cathode active material portion 126. The anode active material portion 130 is housed in a space surrounded by the anode current collector 132, the separator 128 and the frame member 134.

The separator 128 is a microporous membrane of a polyolefin such as polyethylene or polypropylene. The material of the frame member 134 is, for example, acrylic resin, urethane resin, epoxy resin, polyethylene resin, polypropylene resin, polyimide resin, rubber (ethylene-propylene-diene rubber: EPDM), isocyanate adhesive, acrylic resin adhesive, cyanoacrylate adhesive, hot melt adhesive (urethane resins, polyamide resins, polyolefin resins), resins obtained by copolymerizing ethylene, propylene, and butene, the main component of which is amorphous polypropylene resin, and the like. The material of the frame member 134 is preferable to be an ethylene-vinyl acetate copolymer or maleic anhydride-modified polyethylene.

The lithium-ion battery 116 is a sheet-shaped cell or a plate-shaped cell, wherein one side is the cathode current collector 124 and the other side is the anode current collector 132. The lithium-ion battery module 114 comprises a plurality of stacked lithium-ion batteries 116. The cathode current collector 124 and the anode current collector 132 of the adjacent lithium-ion battery 116 are connected electrically in series. Also, the lithium-ion battery module 114 may have only one lithium-ion battery 116. A plurality of stacked lithium-ion batteries 116 or one lithium-ion battery 116 is covered by the exterior film 118. The exterior film 118 is for example, a stacked film with a three-layer structure, in which polypropylene (PP), aluminum, and nylon are stacked in this order.

Next, the effect of the vehicle seat 110 will be explained. Since the lithium-ion battery module 114 is housed in the housing space 120 of the cushion pad 112 while being in contact with an inner surface of the housing space 120, the vehicle seat 110 has a simpler structure than a structure having a gap between the lithium-ion battery module 114 and the seat pad 112. Furthermore, since both sides of the lithium-ion battery module 114 may be in contact with the inner surface of the housing space 120, and the lithium-ion battery module 114 is sandwiched and held by the cushion pad 112, the structure can be simple. Also, since the cathode current collector 124 and the anode current collector 132 include resin, it is possible to suppress the resonance frequency to a lower value than a metal current collector. It is preferable that the resonance frequency value of the cushion pad 112 with a built-in battery is 3.4 Hz or less, wherein the lithium-ion battery module 114 is housed in the housing space 120 of the cushion pad 112.

Since the lithium-ion battery module 114 is flexible, in a case when the module 114 is deformed together with the cushion pad 112 by seating, the separator 128 inside the lithium-ion battery 116 is less likely to be damaged. Therefore, extraordinary heat is less likely to occur. Since the lithium-ion battery module 114 is flexible, the seated person is not disturbed. Therefore, the vehicle seat 110 is comfortable to sit on. Furthermore, since the sheet-shaped or the plate-shaped lithium-ion battery module 114 is placed along the seat surface of the cushion pad 112, any local deformation of the lithium-ion battery 116 by seating will be prevented. The arrangement of this lithium-ion battery module 114 also contributes to improving the comfort of the seated person.

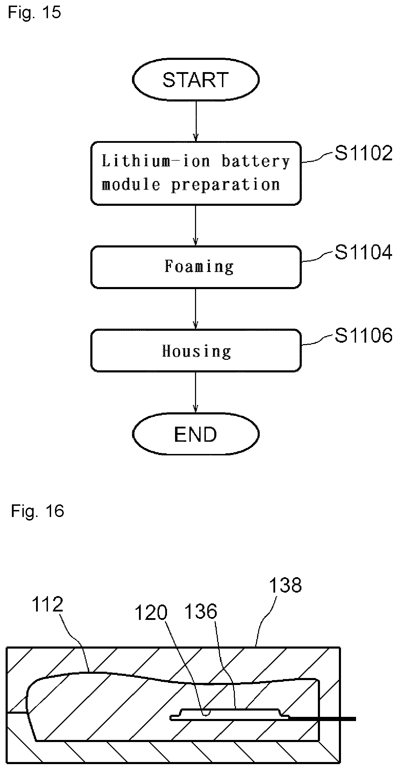

Next, a method of manufacturing the vehicle seat 110 will be explained according to a flowchart shown in FIG. 15. First, it is required to prepare a flexible lithium-ion battery module 114, which comprises a lithium-ion battery 116 having a cathode current collector 124 with resin, an anode current collector 132 with resin, and a resin exterior film covering the lithium-ion battery 116 (S1102: Lithium-ion battery module preparation step).

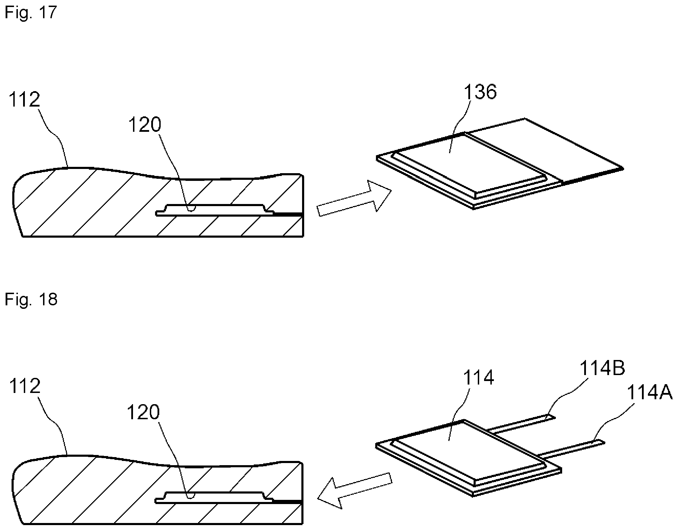

Next, as shown in FIG. 16, it is required to foam the cushion pad 112 by placing an outer core 136 corresponding to an external shape of the lithium-ion battery module 114 in a mold 138 (S1104: Foaming step). Herein, the outer core 136 corresponding to an external shape of the lithium-ion battery module 114 is an outer core, which is the same as an external shape of the lithium-ion battery module 114. Also, the outer core 136 corresponding to an external shape of the lithium-ion battery module 114 may be an outer core, which is a bit smaller than an external shape of the lithium-ion battery module 114. Herein, the parts corresponding to the terminal 114A, 114B in the core 136 are in the shape of a single plate including the terminal 114A,114B. In this plate part, the core 136 is sandwiched and held by the mold 138. After foaming, as shown in FIG. 17, the core 136 is taken out, and the housing space 120 to house the lithium-ion battery module 114, is formed inside the cushion pad 112.

Next, as shown in FIG. 18, the lithium-ion battery module 114 is housed in the housing space 120 of the cushion pad 112 (S1106: Housing step). Herein, the terminals 114A, 114B of the lithium-ion battery module 114 extend to the outside of the cushion pad 112. The lithium-ion battery module 114 is housed in the housing space 120 of the cushion pad 112 while both sides of the module 114 are in contact with the inner surface of the housing space 120.

Herein, the back pad 122 is also formed by foaming. After this, these cushion pad 112 and the back pad 122 are covered with a skin material and are attached to a certain frame, and so on, then the manufacturing of the vehicle seat 110 is completed. After this, the manufacturing of the vehicle seat 110 is repeated in the same manner.

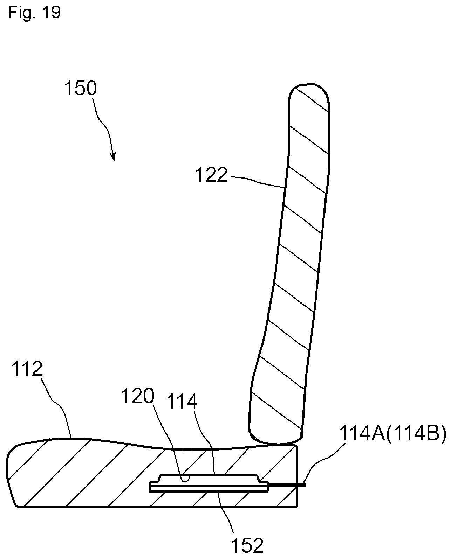

Next, the second variation of this invention will be explained. As shown in FIG. 19, the vehicle seat 150 according to the second variation further comprises an elastic auxiliary member 152, which is placed on one side of the lithium-ion battery module 114. Since other components are the same as the vehicle seat 110 in the first variation, the same reference numbers mentioned in FIG. 11~18 are given to those components, and the detailed explanation is omitted. The elastic auxiliary member 152 is an elastic plate. The elastic auxiliary member 152 is placed on the lower surface of the lithium-ion battery module 114. Therefore, the elastic auxiliary member 152 is placed along the seat as well. The material of the elastic auxiliary member 152 is, for example, thermoplastic resins such as polyetheretherketone (PEEK), thermosetting resins such as epoxy resins and vinyl ester resins, or GFRP, CFRP, etc. containing these resins. With this elastic auxiliary member 152, it is possible to adjust the elasticity of the cushion pad 112. It is possible to prevent the lithium-ion battery module 114 from deforming as well. Also, since the elastic auxiliary member 152 is sandwiched and held by the cushion pad 112 together with the lithium-ion battery module 114, the structure is simple.

In order to produce the vehicle seat 150, in the foaming step S1104, an outer core corresponds to an external shape of the lithium-ion battery module 114 and the elastic auxiliary member 152, which is placed underneath module 114. For example, it is the outer core of the lithium-ion battery module 114 and the elastic auxiliary member 152, which is placed underneath module 114. Also, it can be the slightly shrunk outer core of the lithium-ion battery module 114 and the elastic auxiliary member 152, which is placed underneath module 114. For example, it can be the outer core, which is similar to the outer shape of the lithium-ion battery module 114. In the housing step S1106, the elastic auxiliary member 152 is housed in the housing space 120 of the cushion pad 112 together with the lithium-ion battery module 114. Herein, the lithium-ion battery module 114 can be inserted after inserting the elastic auxiliary member 152 in the housing space 120. Also, the elastic auxiliary member 152 can be inserted after inserting the lithium-ion battery module 114 in the housing space 120.

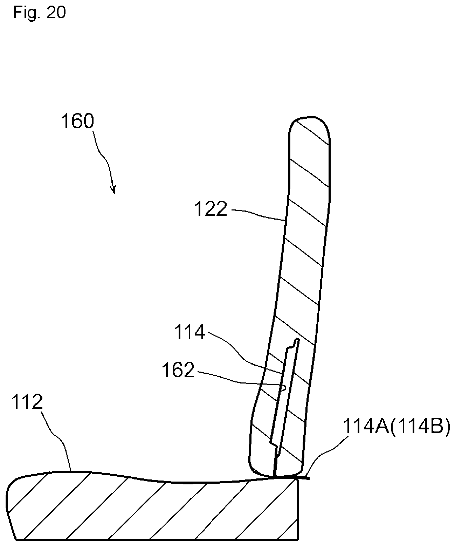

Next, the third variation of this invention will be explained. As shown in FIG. 20, the vehicle seat 160 according to the third variation comprises the lithium-ion battery module 114, which is placed in the housing space 162 of the back pad 122 (seat pad) of the backrest. The housing space 162 is formed alongside facing the back of the seated person (the side facing the seated person of the seat pad) of the back pad 122. Therefore, the plate-shaped or sheet-shaped lithium-ion battery module 114 is placed alongside facing the back of the seated person of the back pad 122. Since other components are the same as the vehicle seat 110 in the first variation, the same reference numbers mentioned in FIG. 11~18 are given to those components, and the detailed explanation is omitted. Since the lithium-ion battery module 114 is housed in the housing space 162 of the back pad 122 while being in contact with an inner surface of the housing space 162, the vehicle seat 160 has a simpler structure than a structure having a gap between the lithium-ion battery module 114 and the back pad 122. Furthermore, since both sides of the lithium-ion battery module 114 are in contact with the inner surface of the housing space 162 and the lithium-ion battery module 114 is sandwiched and held by the back pad 122, the structure can be simple. Also, since the cathode current collector 124 and the anode current collector 132 include resin, it is possible to suppress the resonance frequency to a lower value than a metal current collector. It is preferable that a resonance frequency value of the back pad 122 with a built-in battery is 3.4 Hz or less, wherein the lithium-ion battery module 114 is housed in the housing space 162 of the back pad 122.

Since the lithium-ion battery module 114 is flexible, in a case when the module 114 is deformed together with the back pad 122 by seating, the separator 128 inside the lithium-ion battery 116 is less likely to be damaged. Therefore, extraordinary heat is less likely to occur. Since the lithium-ion battery module 114 is flexible, the seated person is not disturbed. Therefore, the vehicle seat 160 is comfortable to sit. Furthermore, since the sheet-shaped or the plate-shaped lithium-ion battery module 114 is placed alongside facing the back of the seated person of the back pad 122, any local deformation of the lithium-ion battery 116 by seating is prevented. The arrangement of this lithium-ion battery module 114 also contributes to improving the comfort of the seated person.

In order to produce the vehicle seat 160, the back pad 122 having the housing space 162 is foamed by making use of the outer core corresponding to an external shape of the lithium-ion battery module 114 in the foaming step S1104, then the lithium-ion battery module 114 is housed in the housing space 162 of the back pad 122 in the housing step S1106 as well as the first variation.

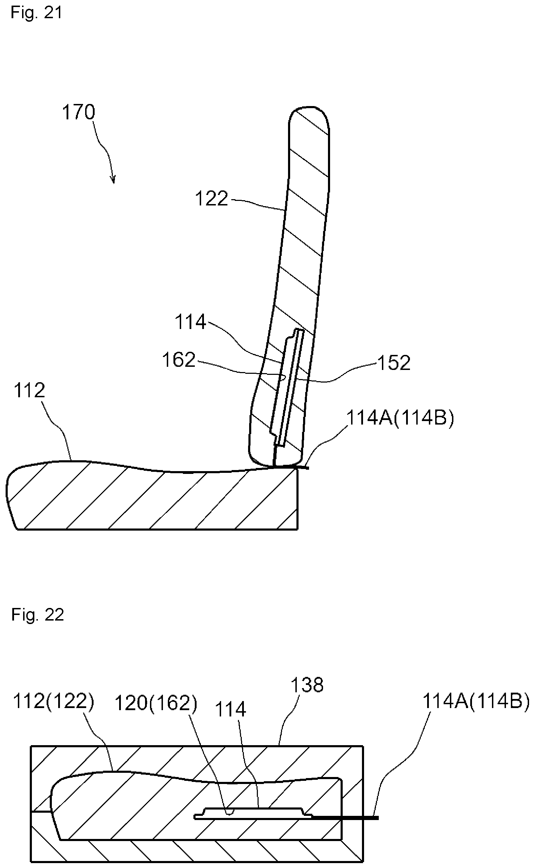

Next, the fourth variation of this invention will be explained. As shown in FIG. 21, in addition to the third variation, the vehicle seat 170 according to the fourth variation, further comprises an elastic auxiliary member 152, which is placed on one side of the lithium-ion battery module 114. Since other components are the same as the vehicle seat 160 in the third variation, the same reference numbers mentioned in FIG. 20 are given to those components, and the detailed explanation is omitted. The elastic auxiliary member 152 is placed on the back surface of the lithium-ion battery module 114. Therefore, the elastic auxiliary member 152 is placed alongside facing the back of the seated person in the backrest. With this elastic auxiliary member 152, it is possible to adjust the elasticity of the back pad 122. It is possible to prevent the lithium-ion battery module 114 from deforming as well. Also, since the elastic auxiliary member 152 is sandwiched and held by the back pad 122 together with the lithium-ion battery module 114, the structure is simple.

In order to produce the vehicle seat 170, in the foaming step S1104, an outer core corresponding to an external shape of the lithium-ion battery module 114 and the elastic auxiliary member 152, which is placed underneath, is used as the second variation as well. For example, it is the outer core of the lithium-ion battery module 114 and the elastic auxiliary member 152, which is placed behind. Also, it can be the slightly shrunk outer core of the lithium-ion battery module 114 and the elastic auxiliary member 152, which is placed behind. For example, it can be the outer core, which is similar to the outer shape of the lithium-ion battery module 114. In the housing step S1106, the elastic auxiliary member 152 is housed in the housing space 162 the of the back pad 122 together with the lithium-ion battery module 114. Herein, the lithium-ion battery module 114 can be inserted after inserting the elastic auxiliary member 152 in the housing space 162. Also, the elastic auxiliary member 152 can be inserted after inserting the lithium-ion battery module 114 in the housing space 162.

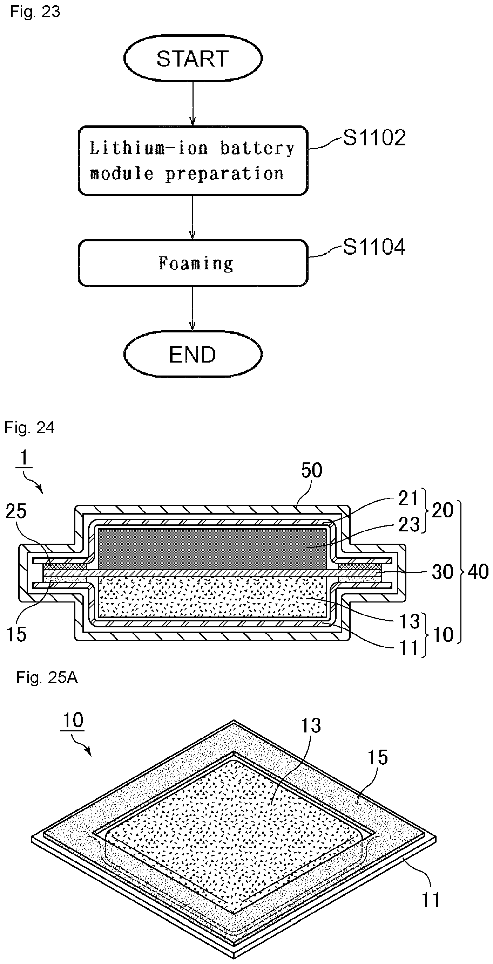

Next, the fifth variation of this invention will be explained. In the first to fourth variations, the housing space 120 (or 162) is formed in the cushion pad 112 (or the back pad 122) by making use of the outer core 136 in the foaming step S1104, then the lithium-ion battery module 114 is housed in the housing space 120 (or 162) in the housing step S1106. On the contrary, in the fifth variation, the core is not used in the foaming step S1104. As shown in FIG. 22, the housing space 120 (or 162) is formed inside the cushion pad 112 (or the back pad 122) to house the lithium-ion battery module 114, in addition to this, the cushion pad 112 (or the back pad 122) is foamed by placing the lithium-ion battery module 114 in the mold 138 to house the lithium-ion battery module 114 in the housing space 120 (or 162) of the cushion pad 112 (or the back pad 122) while being in contact with the inner surface of the housing space 120 (or 162). In the foaming step S1104, the lithium-ion battery module 114 is held in the mold 138 at the terminals 114A, 114B. Herein, in a case when the elastic auxiliary member 152 is equipped with the second and the fourth variation as well, the elastic auxiliary member 152 is attached to the bottom surface (or back surface) with adhesive or the like, and the elastic auxiliary member 152 is held together with the lithium-ion battery module 114 in the foaming step S1104. As shown in FIG. 23, in the fifth variation, the foaming step S1104 also serves as a housing step, and the housing step is not performed after the foaming step S1104. Since other components are the same as the first to fourth variations, the same reference numbers mentioned in FIG. 11~21 are given to those components, and the detailed explanation is omitted. In this fifth variation, it is not necessary to use a core in the foaming step S1104. In addition, since the foaming step S1104 also serves as a housing step, the vehicle seat 110, 150, 160, 170 can be produced easier.

Herein, in the first variation, the lithium-ion battery module 114 is equipped in the cushion pad 112. In the third variation, the lithium-ion battery module 114 is equipped in the back pad 122 of the backrest. However, the lithium-ion battery module 114 can be equipped in both the cushion pad 112 and the back pad 122 of the backrest. In this case, the elastic auxiliary member 152 may be equipped in the cushion pad 112 of the seat just like the second variation. Also, the elastic auxiliary member 152 may be equipped in the back pad 122 of the backrest just like the fourth variation. Also, the elastic auxiliary member 152 may be equipped in both the cushion pad 112 and back pad 122.

In addition, in the second variation, the elastic auxiliary member 152 is placed on the lower surface of the lithium-ion battery module 114 in the cushion pad 112. However, the elastic auxiliary member 152 may be placed on the upper surface of the lithium-ion battery module 114 in the cushion pad 112. Also, two elastic auxiliary members 152 may be placed on both sides of the lithium-ion battery module 114 in the cushion pad 112. In the fourth variation, the elastic auxiliary member 152 is placed on the back surface of the lithium-ion battery module 114 in the cushion pad 122. However, the elastic auxiliary member 152 may be placed on the front surface of the lithium-ion battery module 114 in the cushion pad 122. Also, two elastic auxiliary members 152 may be placed on both sides of the lithium-ion battery module 114 in the cushion pad 122.

Furthermore, in the first to fifth variations, although an aircraft is illustrated as the example in which vehicle seats 110, 150, 160, 170 are used. However, it can also be applied to other vehicles such as automobiles, buses, ships, and the like.

### [Example]

The sheet pad with a built-in battery, which is shown in FIG. 11 and FIG. 12, was prepared, wherein a lithium-ion battery module was housed in a cushion pad (seat pad). The configuration of the lithium-ion battery module is as follows. Herein, a frame member is composed of two sheets. Specifically, a separator is sandwiched by a cathode frame member and an anode frame member.
Single cell size: 900mm × 900mm × 600µm
Frame member size: 900 mm × 900 mm × 250 µm × 2 sheets
Frame member's hole size: 880mm × 880mm
Size of cathode current collector and anode current collector: 900 mm × 900 mm × 50 µm
Separator size: 885 mm × 885 mm × 25 µm × 1 sheet
Frame member material: ethylene-vinyl acetate copolymer (product name "Mersen (registered trade name) G7055")
Materials for cathod and anode current collectors: polypropylene (product name "SunAllomer (registered trade name) PL500A" manufactured by SunAllomer Co., Ltd.) (B-1) 75% by mass, acetylene black (AB) (Denka Black (registered trade name)) 20% by mass, modified polyolefin resin (Umex (registered trade name) 1001 manufactured by Sanyo Chemical Industries, Ltd.) 5% by mass
Separator material: Polypropylene microporous film (product name "Celgard (registered trade name) 3501")
Cathode active material: nickel/aluminum/lithium cobaltate (core-shell (resin) structure) 100% by mass, acetylene black 0.1% by mass
Anode active material: non-graphitizable carbon (hard carbon) (core-shell (resin) structure) 100% by mass, acetylene black 1.6% by mass
Electrolyte solution: mixed solvent of ethylene carbonate (EC) and propylene carbonate (PC) (volume ratio 1:1), Li[(FSO₂)2N] (LiFSI) 2 mol/L
Number of stacked lithium-ion batteries (single cell): 10 sheets
Exterior film: 3-layer stacked film (polypropylene (PP), aluminum, nylon)

The cushion pad (seat pad) was produced as follows, and various physical properties were measured. First, A polyol premix of polyols A-1 (60 parts), A-2 (40 parts), A-3 (2 parts), and A-4 (1 part), and an amount of organic polyisocyanate having an NCO index of 100 parts Component B-1, catalysts C-1 (0.4 parts), C-2 (0.02 parts), foaming agent D-1 (2.3 parts), and foam stabilizer E-1 (0. 6 parts) are foamed in a mold with a flexible polyurethane foam under the following foaming conditions to form a foam. Second, the foam was taken out from the mold and was left overnight. Then, a flexible polyurethane foam was obtained.

### (Foaming conditions)

Mold size: 400mm × 400mm × 100mm (height)
Mold temperature: 65° C
Mold material: Aluminum
Mixing method: Polyol premix and organic polyisocyanate were mixed at 15 MPa using a high-pressure urethane foaming machine (manufactured by PEC).

The polyol components among the materials of the flexible polyurethane foam are as follows.
A-1: A Polyoxyethylene polyoxypropylene polyol which has a functional group number of 4.0, a hydroxyl value of 30, a terminal EO unit content of 10.0%, a primary OH conversion rate of terminal hydroxyl groups of 90%, a monool content of 0.03 meq/g, and a diol content of 16%, and which was obtained by adding PO to pentaerythritol using tris(pentafluorophenyl)borane as a catalyst and then adding EO
A-2: A polyoxyethylene polyoxypropylene polyol which has an average functionality of 4.0, a hydroxyl value of 28, a terminal EO unit content of 12.0%, a primary OH conversion rate of terminal hydroxyl groups of 80%, a monool content of 0.07 meq/g, and a diol content of 0.0%, and which was obtained by conducting a block addition of PO and EO into pentaerythritol using potassium hydroxide as a catalyst, and a polymer polyol (polymer content 33.0%) obtained by copolymerizing styrene and acrylonitrile (weight ratio: 30/70), hydroxyl value 22 among a mixture of polyoxyethylene polyoxypropylene polyols (weight ratio: 20:80), which have an average functionality 3.0, hydroxyl value 34, terminal EO unit content 14.0%, primary OH conversion rate of terminal hydroxyl groups 82%, monol content 0.06 meq/g, diol content 0.0%, and which was obtained by conducting a block addition of PO and EO to glycerin using potassium hydroxide as a catalyst
A-3: PO adduct of sorbitol, hydroxyl value 490
A-4: triethanolamine, hydroxyl value 1120

The materials other than polyol components among the materials of the flexible polyurethane foam are as follows.
B-1: TDI-80 (2,4- and 2,6-TDI, ratio of 2,4-form is 80%)/crude MDI (average number of functional groups: 2.9) = 80/20 (weight ratio)
C-1: "DABCO-33LV" manufactured by Air Products Japan Co., Ltd. (33% dipropylene glycol solution of triethylenediamine)
C-2: "TOYOCAT ET" manufactured by Tosoh Corporation (70% dipropylene glycol solution of bis(dimethylaminoethyl) ether)
D-1: water
E-1: "TEGOSTAB B8737" manufactured by EVONIK (polysiloxane foam stabilizer)

Various physical properties of the flexible polyurethane foam, which was obtained in this way, and in which the lithium-ion battery module was not installed yet, were measured. The measurement results are as follows.
Core density: 57.3 kg/m³ (based on JIS K6400)
Foam hardness (25%-ILD): 271N/314cm² (based on JIS K6400)
Impact resilience: 64% (based on JIS K6400)
Compressive residual strain rate: 2.5% (according to JIS K6400)
Wet heat compression residual strain rate: 9.7% (according to JIS K6400, temperature 50° C, humidity 95%)
Resonance frequency: 3.2 Hz (based on JASO B407 test method)

After the physical properties were measured, a housing space was formed in the polyurethane foam having a height of 50 mm, and a lithium ion battery module was inserted therein. After this, the resonance frequency of the seat pad with a built-in battery was measured. The measurement results are as follows.
Resonance frequency: 3.4 Hz

### [Comparative example]

For comparison with the above-mentioned example, a sheet pad with a built-in battery having a different cathode current collector and a different anode current collector of the lithium-ion battery was prepared. Other configurations are the same as those of the example.
Cathode current collector material: Carbon-coated aluminum
Thickness of cathode electrode current collector: 20 µm
Anode current collector material: copper foil
Thickness of anode electrode current collector: 35 µm

The resonance frequency of the seat pad with built-in battery of the comparative example was measured in the same manner as in the example. The measurement result is as follows.
Resonant frequency: 5.7 Hz

The resonance frequency of the seat pad with built-in battery of the comparison was 5.7 Hz, which is close to the frequency 6 Hz or 5 Hz, which is said to make people feel uncomfortable. On the other hand, the resonance frequency of the seat pad with built-in battery of the example was 3.4 Hz, which was significantly lower than 6 Hz or 5 Hz. In conclusion, it was confirmed that a more comfortable vehicle seat can be obtained according to the example than the comparative example.

### [Variation of a production method for a recyclable electrode active material for a lithium-ion battery, a production method for a solution containing a metal ion, a lithium-ion battery, a production method for a recyclable sheet-shaped electrode member for a lithium-ion battery, and a production method for a recyclable electrode sheet for a lithium-ion battery]

Hereinafter, variation for a production method for a recyclable electrode active material for a lithium-ion battery, a production method for a solution containing a metal ion, a lithium-ion battery, a production method for a recyclable sheet-shaped electrode member for a lithium-ion battery, and a production method for a recyclable electrode sheet for a lithium-ion battery will be explained.

This variation relates to a production method for a recyclable electrode active material for a lithium-ion battery, a production method for a solution containing a metal ion, a lithium-ion battery, a production method for a recyclable sheet-shaped electrode member for a lithium-ion battery, and a production method for a recyclable electrode sheet for a lithium-ion battery.

Lithium-ion (secondary) batteries have been widely used in recent years as high-capacity, small-sized, and lightweight secondary batteries. In general, a lithium-ion battery is housed in a container with a separator sandwiched by a cathode active material layer containing a cathode active material and an electrolytic solution, and an anode active material layer containing an anode active material and an electrolytic solution.

Nickel oxides and cobalt oxides are often used as cathode electrode active materials. Metals such as nickel and cobalt are expensive, and if discarded as they are, they impose a burden on the environment. Therefore, it is desired to recycle and reuse them.

In Patent Reference 6, a technique to collect a cathode electrode active material from waste lithium-ion batteries or waste electrode materials is disclosed. Patent Reference 6 discloses that the organic matter contained in the binder is removed by heating at 400 to 550° C. in the atmosphere after separating and removing the separator from the crushed material obtained by crushing the waste lithium-ion battery or waste electrode material.

In the technique described in Patent Reference 6, waste lithium-ion batteries or waste electrode materials are crushed and heated (fired) at 400 to 550° C. Such a technique has a problem in that the steps up to separating and recovering the active material are complicated. In addition, when the waste lithium-ion batteries or the waste electrode materials are heated at 400 to 550° C, the electrolyte salt will thermally decompose and fluorine-containing gas (HF) will be generated. Therefore, there was a problem that installing an exhaust gas treatment device was inevitable.

Furthermore, as mentioned in Patent Reference 7, the particle size of the cathode electrode active material, which is in the powdery or granular lithium-ion battery scrap, obtained by roasting, crushing, and sieving the battery, is a coarse particle (for example, the particle size is more than 1 mm) in which the cathode electrode active material is bound with a binder resin. Since this coarse particle does not have a large surface area, the ion extraction efficiency is low when performing acid leaching with an acidic solution. Therefore, it has been desired to perform more efficient ion extraction.

This variation has been made in view of the above-mentioned problems and has an objective to provide a production method for a recyclable electrode active material for a lithium-ion battery from lithium-ion batteries in a simple process with no high heating, a production method for a solution containing a metal ion constituting electrode active materials from said recyclable electrode active material for lithium-ion batteries, a lithium-ion battery which is suitable for a said production method for a recyclable electrode active material for a lithium-ion battery, and production methods for a recyclable sheet-shaped electrode member for a lithium-ion battery, and for a recyclable electrode sheet for a lithium-ion battery from lithium-ion batteries in a simple process with no high heating.

This variation relates to a method of manufacturing a recyclable electrode active material for a lithium-ion battery, the lithium-ion battery having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer in which a first current collector is a first resin current collector, the production method characterized by including an isolation step of isolating the first electrode active material from the lithium-ion battery; a production method for a solution containing a metal ion of a metal element constituting an electrode active material, the production method characterized by including a dispersion liquid preparation step of dispersing a recyclable electrode active material obtained by the production method for a recyclable electrode active material for a lithium-ion battery according to the present invention, in a solvent containing water, to obtain an electrode active material dispersion liquid, and a pH adjustment step of adjusting a pH of the electrode active material dispersion liquid such that a hydrogen ion exponent (pH) of an aqueous solution fractionated from the electrode active material dispersion liquid at 25° C is 5 or less; a lithium-ion battery characterized by including a charge storage element consisting of a first electrode that has a first resin current collector and has a first electrode active material layer formed on the first resin current collector and consisting of a first electrode composition containing a first electrode active material, a second electrode that has a second resin current collector and has a second electrode active material layer formed on the second resin current collector and consisting of a second electrode composition containing a second electrode active material, and a separator disposed between the first electrode active material layer and the second electrode active material layer, in which the first resin current collector contains a first matrix resin and a first conductive filler, the second resin current collector contains a second matrix resin and a second conductive filler, a melting point of the first matrix resin is less than 200° C, and a melting point of the second matrix resin is higher than the melting point of the first matrix resin by 30° C or higher; a lithium-ion battery is a lithium-ion battery characterized by having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer, in which the first current collector and the separator are adhered to each other with the first sealing material being sandwiched therebetween at an outer peripheral edge portion on which the first electrode active material layer is not formed, the second electrode current collector and the separator are adhered to each other with the second sealing material being sandwiched therebetween at an outer peripheral edge portion on which the second electrode active material layer is not formed, and the SP value and the Tg of each of the first sealing material and the second sealing material respectively satisfy the following conditions (1) and (2).
Condition (1): [the absolute value of the difference between the SP value of the resin constituting the first sealing material and the SP value of the resin constituting the second sealing material]>3.5
Condition (2): [the absolute value of the difference between the Tg of the resin constituting the first sealing material and the Tg of the resin constituting the second sealing material]≥35; a production method for a recyclable sheet-shaped electrode member for a lithium-ion battery, the lithium-ion battery having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer, in which the first current collector and the separator are adhered to each other with a first sealing material being sandwiched therebetween at an outer peripheral edge portion on which the first electrode active material layer is not formed, is characterized by including an isolation step of separating the first current collector and the separator with the first sealing material as a boundary, to isolate the first recyclable sheet-shaped electrode member including the first current collector and the first electrode active material layer from a lithium-ion battery; and; a production method for a recyclable electrode sheet for a lithium-ion battery, the lithium-ion battery having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer, in which the first current collector and the separator are adhered to each other with a first sealing material being sandwiched therebetween at an outer peripheral edge portion on which the first electrode active material layer is not formed, and the second current collector and the separator are adhered to each other with a second sealing material being sandwiched therebetween at an outer peripheral edge portion on which the second electrode active material layer is not formed, is characterized by including an isolation step of separating the second current collector and the separator with the second sealing material as a boundary, to isolate the first recyclable electrode sheet consisting of the first current collector, the first electrode active material layer, the separator, and the first sealing material from the lithium-ion battery.

According to this variation, it is possible to provide a production method for a recyclable electrode active material for a lithium-ion battery from lithium-ion batteries in a simple process with no high heating, a production method for a solution containing a metal ion constituting electrode active materials from said recyclable electrode active material for lithium-ion batteries, a lithium-ion battery which is suitable for a said production method for a recyclable electrode active material for a lithium-ion battery, and production methods for a recyclable sheet-shaped electrode member for a lithium-ion battery, and for a recyclable electrode sheet for a lithium-ion battery from lithium-ion batteries in a simple process with no high heating.

Hereinafter, this variation will be described in detail. In the present specification, the lithium-ion battery in a case of being described shall include a concept of a lithium-ion secondary battery as well. In addition, the electrode active material isolated from a lithium-ion battery is referred to as a recyclable electrode active material in order to distinguish it from an electrode active material that is used in a case where a lithium-ion battery is produced. In addition, the member in which the recyclable electrode active material is combined with at least one of a current collector and a separator is referred to as a recyclable sheet-shaped electrode member in order to distinguish it from a sheet-shaped electrode member that is used in a case where a lithium-ion battery is manufactured. Further, the member in which the recyclable electrode active material is combined with a current collector and a separator is referred to as a recyclable electrode sheet in order to distinguish it from an electrode that is used in a case where a lithium-ion battery is manufactured.

### [Production Method for Recyclable Electrode Active Material for Lithium-ion Battery]

This variation of the production method for a recyclable electrode active material for a lithium-ion battery, the lithium-ion battery having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer, in which the first current collector and the separator are adhered to each other with a first sealing material being sandwiched therebetween at an outer peripheral edge portion on which the first electrode active material layer is not formed, includes an isolation step of separating the first current collector and the separator with the first sealing material as a boundary, to isolate the first electrode active material from the lithium-ion battery.

In this variation of the production method for a recyclable electrode active material for a lithium-ion battery, since the first current collector and the separator are separated with the first sealing material as a boundary, the first electrode active material which is a recyclable electrode active material can be isolated from a lithium-ion battery. Since the first sealing material is a resin that adheres the first current collector to the separator, the first current collector and the separator can be separated with the first sealing material as a boundary, without heating at a high temperature, for example, 400° C. to 550° C. As a result, the process becomes simple and the recycling cost can be suppressed. Further, since the recyclable electrode active material to be obtained is difficult to be sintered, it is possible to obtain a recyclable electrode active material having a large specific surface area. The recyclable electrode active material having a large specific surface area has high ion extraction efficiency and is suitable for recycling.

### [Lithium-ion Battery]

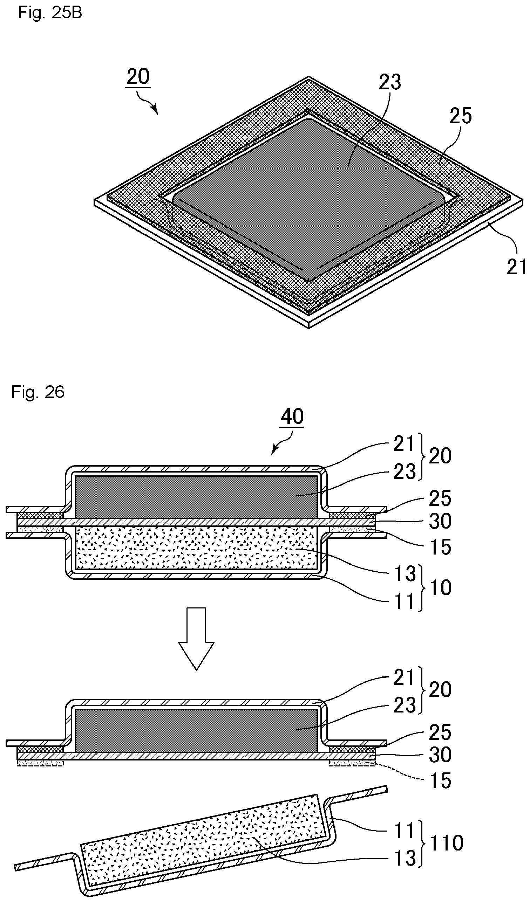

The constitution of the lithium-ion battery that is used in this variation of the production method for a recyclable electrode active material for a lithium-ion battery will be described with reference to FIG. 24, FIG. 25A, and FIG. 25B. FIG. 24 is a cross-sectional view schematically illustrating an example of a lithium-ion battery that is used in this variation of the production method for a recyclable electrode active material for a lithium-ion battery, FIG. 25A is a perspective view schematically illustrating a first electrode constituting a charge storage element illustrated in FIG. 24, and FIG. 25B is a perspective view schematically illustrating a second electrode constituting a charge storage element illustrated in FIG. 24. As illustrated in FIG. 24, in a lithium-ion battery 1, a charge storage element 40 is constituted such that a first electrode 10 that has a first current collector 11 and has a first electrode active material layer 13 containing a first electrode active material, where the first electrode active material layer 13 is formed on the first current collector 11, is disposed to be opposed to a second electrode 20 that has a second current collector 21 and has a second electrode active material layer 23 containing a second electrode active material, where the second electrode active material layer 23 is formed on the second current collector 21, with a separator 30 being sandwiched therebetween, and the outside of the charge storage element 40 is covered by a battery exterior body 50.

An insulating layer (not shown in the figure) is formed on the inner surface of the battery exterior body 50, and the first current collector 11 and the second current collector 21 are insulated from each other. Further, external electrodes (not shown in the figure) are connected to the first current collector 11 and the second current collector 21, and a part of the external electrode is led out to the outside of the battery exterior body 50.

As illustrated in FIG. 25A, in a case where the charge storage element. 40 is viewed along the direction in which the first current collector 111 and the second current collector 21 face each other, the first electrode active material layer 13 is not provided but the first sealing material 15 is provided at the outer peripheral edge portion of the first current collector 11. In addition, the first current collector 11 and the separator (not shown in the figure) are adhered to each other with the first sealing material 15 provided at the outer peripheral edge portion being sandwiched therebetween. As illustrated in FIGS. 24 and 25A, the first electrode active material layer 13 is covered by the first current collector 11, the separator 30, and the first sealing material 15. As a result, in a case where the first sealing material 15 adheres the separator 30 and the first current collector 11, the first electrode active material layer 13 is not exposed to the outside. In other words, in a case where the first current collector 11 and the separator 30 are separated with the first sealing material 15 as a boundary, the first electrode active material layer 13 can be isolated to the outside of the charge storage element 40.

As illustrated in FIG. 25B, in a case where the charge storage element 40 is viewed along the direction in which the first current collector 11 and the second current collector 21 face each other, the second electrode active material layer 23 is not provided but the second sealing material 25 is provided at the outer peripheral edge portion of the second current collector 21. In addition, the second current collector 21 and the separator (not shown in the figure) are adhered to each other with the second sealing material 25 being sandwiched therebetween. As illustrated in FIGS. 24 and 25B, the second electrode active material layer 23 is covered by the second current collector 21, the separator 30, and the second sealing material 25.

Although an example in which the second current collector 21 and the separator 30 are adhered to each other by the second sealing material 25 is described in FIGS. 24 and 25B, it is noted that in a lithium-ion battery that is used in this invention of the production method for a recyclable electrode active material for a lithium-ion battery, the second sealing material is not essential, and the second current collector may be directly adhered to the separator. Examples of the method of directly adhering the second current collector to the separator include a method of subjecting the second current collector and the separator to thermocompression bonding.

### [Isolation Step]

In the isolation step, the first current collector and the separator are separated with the first sealing material as a boundary. Since the first current collector and the separator are separated with the first sealing material as a boundary, it is possible to easily isolate the first electrode active material disposed between the first current collector and the separator.

Examples of the method of separating the first current collector from the separator with the first sealing material as a boundary include a method of heating the charge storage element, a method of immersing the charge storage element in a solvent, or a method of cutting the first sealing material. Hereinafter, each of embodiments will be described as an example of the method of heating the charge storage element, as a first embodiment of this invention of the production method for a recyclable electrode active material for a lithium-ion battery; as an example of the method of immersing the charge storage element in a solvent, as a second embodiment of the production method for a recyclable electrode active material for a lithium-ion battery; and as an example of the method of cutting the first sealing material, as a third embodiment of this invention of the production method for a recyclable electrode active material for a lithium-ion battery.

In the first embodiment of this variation of the production method for a recyclable electrode active material for a lithium-ion battery, it is preferable for the isolation step to include a step of heating the charge storage element at a temperature equal to or higher than a melting point of a resin constituting the first sealing material and lower than 200° C. In a case where the charge storage element is heated at a temperature equal to or higher than the melting point of the resin constituting the first sealing material and lower than 200° C. in the isolation step, the first sealing material can be softened, and thus the first current collector and the separator can be separated with the first sealing material as a boundary.

An example of the first embodiment of this variation of the production method for a recyclable electrode active material for a lithium-ion battery will be described with reference to FIG. 26. FIG. 26 is a cross-sectional view schematically illustrating an example of the isolation step. In the isolation step illustrated in FIG. 26, the charge storage element 40 is heated to separate the first current collector 11 from the separator 30 with the first sealing material 15 as a boundary. The melting point of the first sealing material 15 is lower than 200° C. As a result, in a case where the battery exterior body 50 is removed from the lithium-ion battery 1, and then the charge storage element 40 is heated at a temperature equal to or higher than the melting point of the resin constituting the first sealing material 15 and lower than 200° C., the first sealing material 15 is softened to separate the first current collector 11 from the separator 30 with the first sealing material 15 as a boundary, whereby it is possible to obtain a first recyclable sheet-shaped electrode member 110 consisting of the first electrode active material layer 13 and the first current collector 11.

In the first embodiment of this variation of the production method for a recyclable electrode active material for a lithium-ion battery, it suffices that the temperature at which the charge storage element is heated (hereinafter, also referred to as the heating temperature) is equal to or higher than the melting point of the resin constituting the first sealing material and lower than 200° C. However, it is preferably higher than the melting point of the resin constituting the first sealing material by 10° C. or higher, more preferably by 20° C. or higher, and still more preferably by 30° C. or higher.

In the first embodiment of this variation of the production method for a recyclable electrode active material for a lithium-ion battery, the melting point of the resin constituting the first sealing material is lower than 200° C. The resin constituting the first sealing material is preferably at least one selected from the group consisting of polyamide, polyvinylidene fluoride, and polyolefin.

The first current collector may be a metal current collector consisting of metal or may be a resin current collector (a first resin current collector) consisting of a first matrix resin and a conductive filler.

In a case where the second current collector and the separator are adhered by the second sealing material, the melting point of the resin constituting the second sealing material is preferably higher than the melting point of the resin constituting the first sealing material by 30° C. or higher. In a case where the melting point of the resin constituting the second sealing material is higher than the melting point of the resin constituting the first sealing material by 30° C. or higher, it is easy to adjust the temperature to a temperature at which the first sealing material is softened but the second sealing material is not softened. In a case where the charge storage element is heated at a temperature at which the first sealing material is softened but the second sealing material is not softened, the first current collector and the separator can be separated with the first sealing material as a boundary without softening the second sealing material, whereby solely the first electrode active material can be selectively isolated.

The resin constituting the second sealing material is preferably at least one selected from the group consisting of polyamide, polyimide, polyvinylidene fluoride, polyester, and polyolefin. It is noted that polyimide is a thermosetting resin, and thus it does not have a melting point. The melting point of the resin constituting the second sealing material is the temperature at which embrittlement starts in a case where the second sealing material is heated. As a result, in a case where the second sealing material is constituted of a resin having no melting point such as thermosetting resin, thermal decomposition temperature, which is the temperature at which embrittlement starts, shall be used as the melting point of the resin constituting the second sealing material.

In the second embodiment of the production method for a recyclable electrode active material for a lithium-ion battery according to this invention, it is preferable that the isolation step includes a step of immersing the charge storage element in a solvent and an absolute value of a difference between an SP value of a resin constituting the first sealing material and an SP value of the solvent is 1.0 or less. In a case where the absolute value of the difference between the SP value of the resin constituting the first sealing material and the SP value of the solvent to 1.0 or less, the first sealing material can be swollen and softened by a solvent, and thus the first current collector and the separator can be separated with the first sealing material as a boundary.

The SP value [unit: (cal/cm³)^{0.5}] is a value at 25° C., which is calculated according to the method described in Polymer engineering and science Vol. 14, pages 151 to 154 written by Robert F. Fedors et al.

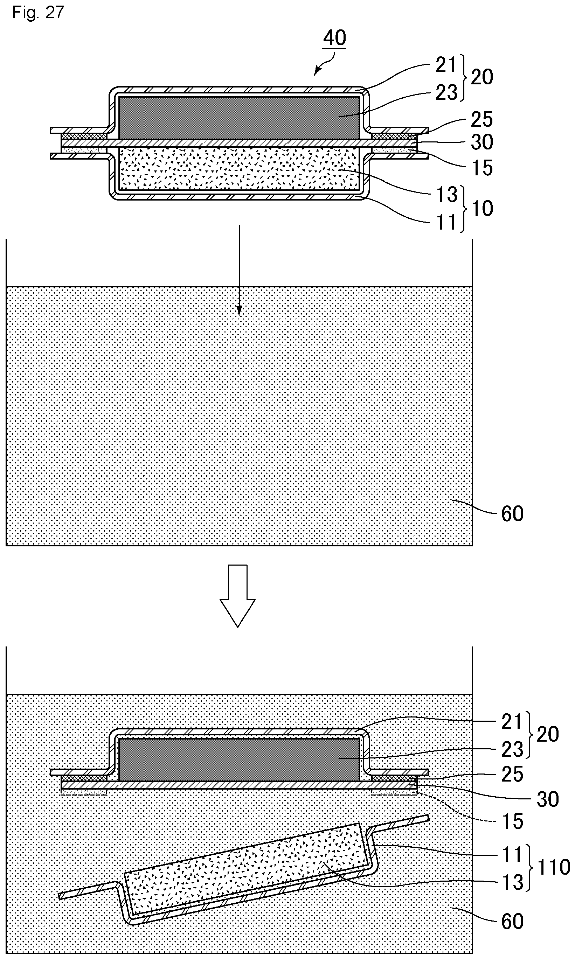

An example of the second embodiment of the production method for a recyclable electrode active material for a lithium-ion battery according to this invention will be described with reference to FIG. 27. FIG. 27 is a cross-sectional view schematically illustrating another example of the isolation step. In the isolation step illustrated in FIG. 27, the battery exterior body 50 is removed from the lithium-ion battery 1, and then the charge storage element 40 is immersed in a solvent 60. At this time, in a case where a solvent is selected so that the absolute value of the difference between the SP value of the resin constituting the first sealing material 15 and the SP value of the solvent 60 to 1.0 or less, the first sealing material 15 swollen and softened by the solvent 60. The first sealing material 15 is swollen and softened, whereby the first current collector 111 and the separator 30 are separated with the first sealing material 15 as a boundary, and it is possible to obtain a first recyclable sheet-shaped electrode member 110 consisting of the first electrode active material layer 113 and the first current collector 11.

In a case where the charge storage element is immersed in a solvent in the isolation step, examples of the resin constituting the first sealing material include polyamide, polyvinylidene fluoride, and polyolefin.

However, in a case where the second current collector and the separator are adhered by the second sealing material, it is preferable that the SP value and the Tg of each of the resin constituting the first sealing material and the resin constituting the second sealing material respectively satisfy both of the following conditions (1) and (2).
Condition (1): [the absolute value of the difference between the SP value of the resin constituting the first sealing material and the SP value of the resin constituting the second sealing material]>3.5
Condition (2): [the absolute value of the difference between the Tg of the resin constituting the first sealing material and the Tg of the resin constituting the second sealing material]≥35

The glass transition temperature (Tg) is a value measured according to the differential scanning calorimetry (DSC) method described in JIS K 7121 (1987).

In a case where the SP value and the Tg of each of the resin constituting the first sealing material and the resin constituting the second sealing material respectively satisfy both of the above conditions (1) and (2), solely the first electrode active material can be selectively isolated by utilizing the difference in physical properties between the resin constituting the first sealing material and the resin constituting the second sealing material. Specifically, in a case where the charge storage element is immersed in a solvent, where the difference between the SP value of the solvent and the SP value of the resin constituting the first sealing material is less than 1.0 and the difference between the SP value of the solvent and the SP value of the resin constituting the second sealing material is more than 2.5, solely the resin constituting the first sealing material can be swollen and softened by the solvent, and thus, solely the first electrode active material can be easily isolated selectively.

Further, in a case where the second current collector and the separator are adhered by the second sealing material, it is preferable that the following condition (3) is further satisfied.
Condition (3): [the absolute value of the difference between the SP value of the separator and the SP value of the resin constituting the second sealing material]≤1.0

In a case where the above condition (3) is satisfied, the separator becomes less soluble in a solvent as in the case where the separator is the second sealing material.

Examples of the solvent that is used in a case where the charge storage element is immersed in a solvent include xylene (SP value: 8.8) and DMF (SP value: 12.0).

The temperature of the solvent in a case where the charge storage element is immersed in a solvent is not particularly limited; however, it is preferably 140° C. to 150° C.

In the third embodiment of the production method for a recyclable electrode active material for a lithium-ion battery according to this invention, it is preferable for the isolation step to include a step of cutting the first sealing material along a direction substantially perpendicular to a direction in which the first current collector and the separator face each other.

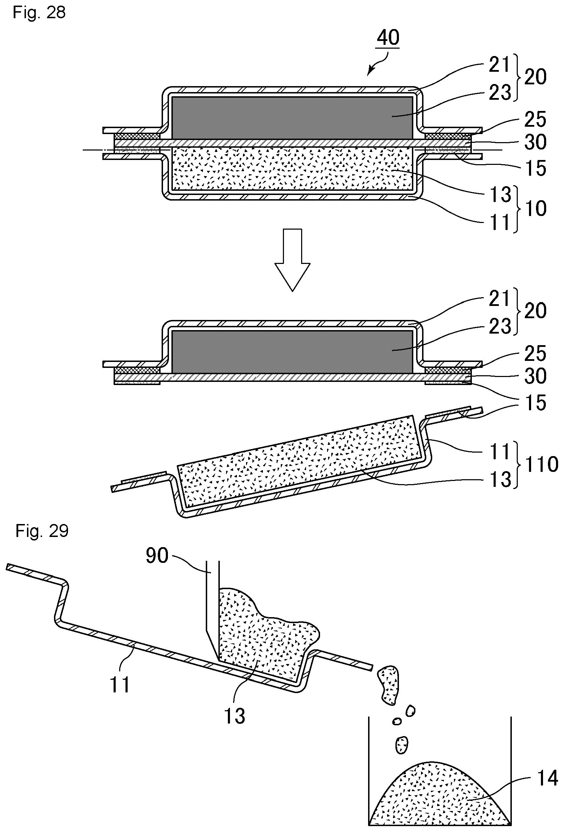

An example of the third embodiment of the production method for a recyclable electrode active material for a lithium-ion battery according to this invention will be described with reference to FIG. 28. FIG. 28 is a cross-sectional view schematically illustrating still another example of the isolation step. After removing the battery exterior body 50 from the lithium-ion battery 1, the first sealing material 15 constituting the charge storage element 40 is cut in a direction substantially perpendicular to a direction in which the first current collector 11 and the separator 30 face each other (cut at the position indicated by the alternate long and short dash line in FIG. 28) to divide the first sealing material 15 itself. The first current collector 11 and the separator 30 are separated by cutting the first sealing material 15, whereby it is possible to obtain the first recyclable sheet-shaped electrode member 110 consisting of the first electrode active material layer 13 and the first current collector 11.

In the third embodiment of the production method for a recyclable electrode active material for a lithium-ion battery according to this invention, the kind of the resin constituting the first sealing material is not particularly limited; however, it is preferably polyolefin.

In the third embodiment of the production method for a recyclable electrode active material for a lithium-ion battery according to this invention, examples of the method of cutting the first sealing material along a direction substantially perpendicular to a direction in which the first current collector and the separator face each other include a method using a blade, a laser cutter, or the like. The blade may be a metal blade or may be a non-metal blade (for example, a ceramic blade).

The recyclable sheet-shaped electrode member 10, which is obtained by the methods illustrated in FIG. 26 to FIG. 28, consists of the first electrode active material layer 13 and the first current collector 11. In the production method for a recyclable electrode active material for a lithium-ion battery according to this invention, the first electrode active material layer 13 is further separated from the recyclable sheet-shaped electrode member 110 in the isolation step.

FIG. 29 is a schematic view illustrating an example of a method of separating the first electrode active material from the recyclable sheet-shaped electrode member for a lithium-ion battery. As illustrated in FIG. 29, the first electrode active material layer 13 formed on the first current collector 11 is scraped off with a squeegee 90 or the like, whereby the recyclable electrode active material 14 containing the first electrode active material can be recovered. Further, in the method illustrated in FIG. 27, the first electrode active material layer 13 is dispersed in the solvent 60, whereby the first electrode active material layer 13 and the first current collector 11 can be separated. In such a case as well, the recyclable electrode active material can be recovered.

The use application of the recyclable electrode active material for a lithium-ion battery obtained by the production method for a recyclable electrode active material for a lithium-ion battery according to this invention is not particularly limited; however, for example, the above recyclable electrode active material may be used as a raw material of the electrode active material layer in a case where a lithium-ion battery is produced, and metals may be recovered therefrom by acid extraction or the like.

In a case where the step illustrated in FIG. 6 is not carried out after the steps illustrated in FIG. 26 to FIG. 28, the steps illustrated in FIG. 3 to FIG. 5 are included in a production method for a recyclable sheet-shaped electrode member for a lithium-ion battery, which will be described later.

Subsequently, the constitution of a lithium-ion battery that is used in the production method for a recyclable electrode active material for a lithium-ion battery according to this invention will be described.

### [Constitution of Lithium-ion Battery]

The lithium-ion battery that is used in the production method for a recyclable electrode active material for a lithium-ion battery has a charge storage element consisting of a first electrode that has the first current collector and has a first electrode active material layer formed on the first current collector and consisting of a first electrode composition containing a first electrode active material, a second electrode that has the second current collector and has a second electrode active material layer formed on the second current collector and consisting of a second electrode composition containing a second electrode active material, and a separator disposed between the first electrode active material layer and the second electrode active material layer, in which the first current collector and the separator are adhered to each other with the first sealing material being sandwiched therebetween at an outer peripheral edge portion on which the first electrode active material layer is not formed.

### [First Electrode]

The first electrode has the first current collector and has the first electrode active material layer containing the first electrode active material formed on the first current collector.

The first current collector may be a metal current collector consisting of metal or may be a resin current collector (a first resin current collector) consisting of a first matrix resin and a conductive filler; however, it is preferably the resin current collector (the first resin current collector).

The thickness of the first current collector is not particularly limited; however, it is preferably 5 to 150 µm.

As the metal current collector, copper, aluminum, titanium, stainless steel, nickel, an alloy thereof, or the like can be used.

The conductive filler is selected from materials having conductivity. Specific examples thereof include a metal (nickel, aluminum, stainless steel (SUS), silver, copper, titanium, or the like), carbon [graphite, carbon black (acetylene black, Ketjen black, furnace black, channel black, thermal lamp black, or the like), or the like], and a mixture thereof; however, carbon is preferable. In a case where the conductive filler is carbon, it is possible to prevent a metal from being mixed in the isolated first electrode active material. In a case where metal is mixed in the isolated first electrode active material, the increase or recovery of the battery capacity of the first electrode active material may be hindered. One kind of these conductive fillers may be used alone, or two or more kinds thereof may be used in combination. Moreover, an alloy or metal oxide thereof may be used. From the viewpoint of electrical stability, aluminum, stainless steel, carbon, silver, copper, titanium, or a mixture thereof is preferable, silver, aluminum, stainless steel, or carbon is more preferable, and carbon is still more preferable. Further, these conductive fillers may be those obtained by coating a conductive material (a metallic conductive material among materials of the conductive filler described above) around a particle-based ceramic material or a resin material with plating or the like.

The average particle size of the conductive filler is not particularly limited; however, it is preferably 0.01 to 10 µm, more preferably 0.02 to 5 µm, and still more preferably 0.03 to 1 µm, from the viewpoint of the electrical characteristics of the battery. In the present specification, the "particle size" means the maximum distance L among the distances between any two points on the contour line of the particle. As the value of the "average particle size", the average value of the particle sizes of the particles observed in several to several tens of visual fields using an observation means such as a scanning electron microscope (SEM) or a transmission electron microscope (TEM) shall be adopted.

The shape (the form) of the conductive filler is not limited to the particle form, may be a form other than the particle form, and may be a form practically applied as a so-called filler-based conductive resin composition such as carbon nanotubes.

The conductive filler may be a conductive fiber of which the shape is fibrous. Examples of the conductive fiber include a carbon fiber such as a PAN-based carbon fibers or a pitch-based carbon fiber, a conductive fiber obtained by uniformly dispersing a metal having good conductivity or graphite in the synthetic fiber, a metal fiber obtained by making a metal such as stainless steel into a fiber, a conductive fiber obtained by coating a surface of an organic fiber with a metal, and a conductive fiber obtained by coating a surface of an organic fiber with a resin containing a conductive substance. Among these conductive fibers, a carbon fiber is preferable. In addition, a polypropylene resin in which graphene is kneaded is also preferable. In a case where the conductive filler is a conductive fiber, the average fiber diameter thereof is preferably 0.1 to 20 µm.

The weight proportion of the conductive filler in the first electrode resin current collector is preferably 5% to 90% by weight and more preferably 20% to 80% by weight. In particular, in a case where the conductive filler is carbon, the weight proportion of the conductive filler is preferably 20% to 30% by weight.

The melting point of the first matrix resin constituting is preferably less than 200° C. Examples of the matrix resin having a melting point of less than 200° C. include polyamide, polyolefin, and polyvinylidene fluoride. Also, it is preferable that the first matrix resin is selected from at least one of polyamide, polyolefin, and polyvinylidene fluoride. The melting point of the polyolefin is about 95° C. to 140° C. The melting point of the polyvinylidene fluoride is about 150° C. to 180° C. In the present specification, a numerical value measured according to the differential scanning calorimetry (DSC) method described in JIS K 7121-1987 is used as the melting point of the first matrix resin.

The first resin current collector may contain other components (a dispersing agent, a crosslinking accelerator, a crosslinking agent, a coloring agent, an ultraviolet absorbing agent, a plasticizer, and the like).

The thickness of the first resin current collector is not particularly limited; however, it is preferably 5 to 400 µm.

The first resin current collector can be obtained, for example, by forming a conductive resin composition obtained by melt-kneading the first matrix resin and the conductive filler into a film shape. Examples of the method of forming a conductive resin composition into a film shape include known film forming methods such as a T-die method, an inflation method, and a calendaring method. The first resin current collector can also be obtained by a forming method other than the film forming.

The first electrode active material layer consists of the first electrode composition containing the first electrode active material. The first electrode active material layer is preferably a non-bound body that does not contain a binding material that binds the first electrode active materials to each other. Here, the non-bound body means that the first electrode active materials are not bound to each other, where "bound" means that the first electrode active materials are irreversibly bound to each other.

The first electrode active material may be a cathode active material or an anode active material.

Examples of the cathode active material include a composite oxide of lithium and a transition metal {a composite oxido having one kind of transition metal (LiCoO₂, LiNiO₂, LiAlMnO₄, LiMnO₂, LiMn₂C₄, or the like), a composite oxide having two kinds of transition metal elements (for example, LiFeMnO4, LiNi₁₋ₓCoₓO₂, LiMn_{1-y}Co_{y}O₂, LiNi_{1/3}Co_{1/3}Al_{1/3}O₂, and LiNi_{0.8}Co_{0.15}Al_{0.05}O₂), a composite oxide having three or more kinds of metal elements [for example, LiMₐM'_{b}M"_{c}O₂ (where M, M', and M" are transition metal elements different each other and satisfy a+b+c=1, and one example is LiNi_{1/3}Mn_{1/3}Co_{1/3}O₂)], or the like}, a lithium-containing transition metal phosphate (for example, LiFePO₄, LiCoPO₄, LiMnPO₄, or LiNiPO₄), a transition metal oxide (for example, MnO₂ and V₂O₅), a transition metal sulfide (for example, MoS₂ or TiS₂), and a conductive macromolecule (for example, polyaniline, polypyrrole, polythiophene, polyacetylene, poly-p-phenylene, or polyvinyl carbazole). Two or more thereof may be used in combination. Here, the lithium-containing transition metal phosphate may be one in which a part of transition metal sites is substituted with another transition metal.

The volume average particle size of the cathode active material is preferably 0.01 to 100 µm, more preferably 0.1 to 35 µm, and still more preferably 2 to 30 µm, from the viewpoint of the electrical characteristics of the battery.

The cathode active material may be a coated cathode active material, where at least a part of a surface of the coated cathode active material is coated with a coating material containing a macromolecule compound. In a case where the periphery of the cathode active material is covered by a coating material, the volume change of the cathode is alleviated, and thus the expansion of the cathode can be suppressed.

As the macromolecule compound constituting the coating material, those described as the non-aqueous secondary battery active material coating resin in Japanese Unexamined Patent Application, First Publication No. 2017-054703 can be suitably used.

The coating material may contain a conducting agent. As the conducting agent, the same one as the conductive filler contained in the first resin current collector can be suitably used.

Examples of the anode active material include a carbon-based material (graphite, non-graphitizable carbon, amorphous carbon, a resin sintered product (for example, a sintered product obtained by sintering and carbonizing a phenol resin, a furan resin, or the like), cokes (for example, a pitch coke, a needle coke, and a petroleum coke), a carbon fiber, or the like), a silicon-based material [silicon, silicon oxide (SiOx), a silicon-carbon composite body (a composite body obtained by coating surfaces of carbon particles with silicon and/or silicon carbide, a composite body obtained by coating surfaces of silicon particles or silicon oxide particles with carbon and/or silicon carbide, silicon carbide, or the like), a silicon alloy (a silicon-aluminum alloy, a silicon-lithium alloy, a silicon-nickel alloy, a silicon-iron alloy, a silicon-titanium alloy, a silicon-manganese alloy, a silicon-copper alloy, a silicon-tin alloy, or the like), or the like], a conductive macromolecule (for example, polyacetylene or polypyrrole), a metal (tin, aluminum, zirconium, titanium, or the like), a metal oxide (a titanium oxide, a lithium-titanium oxide, or the like), a metal alloy (for example, a lithium-tin alloy, a lithium-aluminum alloy, or a lithium-aluminum-manganese alloy), or the like, and a mixture of the above and a carbon-based material. Among the above anode active materials, regarding the anode active material that does not contain lithium or lithium-ions in the inside thereof, a part or all of the anode active material may be subjected to pre-doping treatment to incorporate lithium or lithium-ions in advance. Among these, a carbon-based material, a silicon-based material, or a mixture thereof is preferable from the viewpoint of battery capacity and the like. The carbon-based material is more preferably graphite, non-graphitizable carbon, or amorphous carbon, and the silicon-based material is more preferably silicon oxide or a silicon-carbon composite body.

The volume average particle size of the anode active material is preferably 0.01 to 100 µm, more preferably 0.1 to 20 µm, and still more preferably 2 to 10 µm, from the viewpoint of the electrical characteristics of the battery.

In the present specification, the volume average particle size of the anode active material means the particle size (Dv50) at an integrated value of 50% in the particle size distribution obtained by the microtrack method (the laser diffraction/scattering method). The microtrack method is a method of determining a particle size distribution by using scattered light obtained by irradiating particles with laser light. A MICROTRAC manufactured by Nikkiso Co, Ltd. can be used for measuring the volume average particle size.

The anode active material may be a coated anode active material, where at least a part of a surface of the coated anode active material is coated with a coating material containing a macromolecule compound. In a case where the periphery of the anode active material is covered by a coating material, the volume change of the anode is alleviated, and thus the expansion of the anode can be suppressed.

As the coating material, the same one as the coating material constituting the coated cathode active material can be suitably used.

The first electrode active material layer may contain a pressure-sensitive adhesive resin. As the pressure-sensitive adhesive resin, it is possible to suitably use, for example, a resin obtained by mixing the non-aqueous secondary battery active material coating resin, described in Japanese Unexamined Patent Application, First Publication No. 2017-054703, with a small amount of an organic solvent and adjusting the glass transition temperature thereof to room temperature or lower, and those described as adhesives in Japanese Unexamined Patent. Application, First Publication No. H10-255805. Here, the pressure-sensitive adhesive resin means a resin having pressure-sensitive adhesiveness (an adhering property obtained by applying a slight pressure without using water, solvent, heat, or the like) without solidifying even in a case where a solvent component is volatilized and dried. On the other hand, a solution-drying type binder for an electrode, which is used as a binding material, means a binder that dries and solidifies in a case where a solvent component is volatilized, thereby firmly adhering and fixing active materials to each other. As a result, the solution-drying type electrode binder (the binding material) and the pressure-sensitive adhesive resin are different materials.

The first electrode active material layer may contain an electrolytic solution that contains an electrolyte and a non-aqueous solvent. As the electrolyte, an electrolytic solution that is used in the known electrolytic solution can be used. Examples thereof include lithium salts of inorganic acids, such as LiPF₆, LiBF₄, LiSbF₆, LiAsF₆, and LiClO₄; and lithium salts of organic acids, such as LiN(FSO₂)₂, LiN(CF₃SO₂)₂, LiN(C₂F₅SO₂)₂, and LiC(CF₃SO₂)₃. LiN(FSC₂)₂ (also referred to as LiFSI) is preferable.

As the non-aqueous solvent, a non-aqueous solvent that is used in the known electrolytic solution can be used, and for example, a lactone compound, a cyclic or chain-like carbonic acid ester, a chain-like carboxylic acid ester, a cyclic or chain-like ether, a phosphoric acid ester, a nitrile compound, an amide compound, a sulfone, or a sulfolane, or a mixture thereof can be used.

Among the solvents, a lactone compound, a cyclic carbonic acid ester, a chain-like carbonic acid ester, or a phosphoric acid ester is preferable from the viewpoint of battery output and charging and discharging cycle characteristics, a lactone compound, a cyclic carbonic acid ester, or a chain-like carbonic acid ester is still more preferable, and dimethyl carbonate (SP value: 17.4), a 1:1 (in terms of volume ratio) mixed solution of ethylene carbonate (EC) and dimethyl carbonate (DMC) (SP value: 15.9), or a 1:1 (in terms of volume ratio) mixed solution (SP value: 14.1) of ethylene carbonate (EC) and propylene carbonate (PC) is particularly preferable.

The first electrode active material layer may contain a conductive auxiliary agent. As the conductive auxiliary agent, the same conductive material as the conductive filler contained in the first resin current collector can be suitably used.

The weight proportion of the conductive auxiliary agent in the first electrode active material layer is preferably 2% to 10% by weight.

The first electrode active material layer can be prepared, for example, by applying a slurry containing the first electrode active material and an electrolytic solution onto the surface of the first current collector (the first resin current collector) or the base material and then removing the excess electrolytic solution. In a case where the first electrode active material layer is formed on the surface of the base material, the first electrode active material layer may be combined with the first current collector (the first resin current collector) by a method such as transferring. The slurry may contain a conductive auxiliary agent or a pressure-sensitive adhesive resin, as necessary. Further, the electrode active material may be a coated electrode active material.

### [Second Electrode]

The second electrode comprises a second current collector and a second electrode active material layer having a second electrode active material formed on the second current collector. The second electrode active material layer preferably contains an electrolytic solution containing an electrolyte.

The second current collector may be a metal current collector consisting of metal or may be a resin current collector (a second resin current collector) consisting of a second matrix resin and a conductive filler.

The thickness of the second current collector is not particularly limited; however, it is preferably 5 to 150 µm.

As the metal current collector, copper, aluminum, titanium, stainless steel, nickel, an alloy thereof, or the like can be used.

The second resin current collector contains a second matrix resin and a conductive filler. As the conductive filler, the same one as the conductive filler constituting the first resin current collector can be suitably used. The weight proportion of the conductive filler in the second resin current collector is preferably 5% to 90% by weight and more preferably 20% to 80% by weight. In particular, in a case where the conductive filler is carbon, the weight proportion of the conductive filler is preferably 20% to 30% by weight.

As the second matrix resin consisting of the second resin current collector, the first matrix resin consisting of the first resin current collector can be applicable.

The second resin current collector can be obtained, for example, by forming a conductive resin composition obtained by melt-kneading the second matrix resin and the conductive filler into a film shape. Examples of the method of forming a conductive resin composition into a film shape include known film forming methods such as a T-die method, an inflation method, and a calendaring method. The second resin current collector can also be obtained by a forming method other than the film forming.

The second electrode active material layer consists of the second electrode composition containing the second electrode active material.

The second electrode active material is an electrode active material of which kind is different from that of the first electrode active material. That is, in a case where the first electrode active material is a cathode active material, the second electrode active material is an anode active material, and in a case where the first electrode active material is an anode active material, the second electrode active material is a cathode active material.

The second electrode active material layer may contain a conductive auxiliary agent. As the conductive auxiliary agent, the same conductive material as the conductive filler contained in the first resin current collector can be suitably used.

The weight proportion of the conductive auxiliary agent in the second electrode active material layer is preferably 2% to 10% by weight.

The second electrode active material layer can be prepared, for example, by applying a slurry containing the second electrode active material and an electrolytic solution onto the surface of the second current collector or the base material and then removing the excess electrolytic solution. In a case where the second electrode active material layer is formed on the surface of the base material, the second electrode active material layer may be combined with the second current collector by a method such as transferring. The slurry may contain a conductive auxiliary agent or a pressure-sensitive adhesive resin, as necessary. Further, the electrode active material may be a coated electrode active material.

The second electrode active material layer may contain a pressure-sensitive adhesive resin. As the pressure-sensitive adhesive resin, the same one as the pressure-sensitive adhesive resin which is an optional component of the first electrode active material layer can be suitably used.

### [Separator]

Examples of the separator include known separators for a lithium-ion battery, such as a porous film consisting of polyethylene or polypropylene, a lamination film of a porous polyethylene film and a porous polypropylene, a non-woven fabric consisting of a synthetic fiber (a polyester fiber, an aramid fiber, or the like), a glass fiber, or the like and those above of which the surface is attached with ceramic fine particles such as silica, alumina, or titania. Among these, the separator is preferably a porous film made of polypropylene. The melting point of the separator is preferably 200° C. or higher. In addition, two or more sheets of the separator may be disposed to be overlapped with each other.

### [First Sealing Material]

The first sealing material adheres the first current collector to the separator. The first sealing material contains a resin. The melting point of the resin constituting the first sealing material is preferably less than 200° C. The resin constituting the first sealing material is preferably at least one selected from the group consisting of polyamide, polyvinylidene fluoride, and polyolefin.

### [Second Sealing Material]

The second current collector and the separator may be directly adhered to each other or may be adhered to each other by the second sealing material. The second sealing material contains a resin. In a case where the second current collector and the separator are adhered by the second sealing material, the melting point of the resin constituting the second sealing material is preferably higher than the melting point of the resin constituting the first sealing material by 30° C. or higher. In addition, in a case where the second current collector and the separator are adhered by the second sealing material, the absolute value of the difference between the SP value of the resin constituting the second sealing material and the SP value of the resin constituting the first sealing material is preferably more than 3.5.

The resin constituting the second sealing material is preferably at least one selected from the group consisting of polyamide, polyimide, polyvinylidene fluoride, polyester, and polyolefin.

### [Production method for a solution containing metal ions]

The production method for a solution containing metal ions of metal elements constituting an electrode active material of the present invention may include a dispersion liquid preparation step of dispersing a recyclable electrode active material for a lithium-ion battery obtained by the above-described production method for a recyclable electrode active material for a lithium-ion battery, in a solvent containing water, to obtain an electrode active material dispersion liquid; and a pH adjustment step of adjusting a pH of the electrode active material dispersion liquid such that a hydrogen ion exponent (pH) of an aqueous solution fractionated from the electrode active material dispersion liquid at 25° C. is 5 or less.

In the production method for a solution containing metal ions of metal elements constituting the electrode active material, the recyclable electrode active material obtained by the production method for a recyclable electrode active material is dispersed in a solvent containing water to obtain an electrode active material dispersion liquid. After obtaining the metal element, and then the pH of the electrode active material dispersion liquid is adjusted to a predetermined value to ionize metal elements constituting the electrode active material, which are contained in the electrode active material dispersion liquid, whereby a solution (hereinafter, also referred to as a metal ion solution) containing metal ions of metal elements constituting the electrode active material can be produced.

In the above-described production method for a recyclable electrode active material, since the lithium-ion battery is not heated at a high temperature, for example, 400° C. to 550° C., the sintering of particles of the obtained recyclable electrode active material do not proceed, and thus particles having a large specific surface area can be obtained. As a result, the ion extraction efficiency at the time of acid leaching with an acidic liquid is high, and ion extraction can be carried out efficiently.

### [Dispersion Liquid Adjustment Step]

In the dispersion liquid adjustment step, the recyclable electrode active material obtained by the above-described production method for a recyclable electrode active material for a lithium-ion battery is dispersed in a solvent containing water to obtain an electrode active material dispersion liquid.

The solvent other than the water may be a non-polar solvent or a polar solvent. The polar solvent may be a protic polar solvent or an aprotic polar solvent.

Examples of the non-polar solvent include toluene, xylene, hexane, heptane, and octane, where two or more kinds of them may be used in combination. Examples of the aprotic polar solvent include dimethylformamide (DMF) and dimethyl sulfoxide (DMSO), where two or more of them may be used in combination. The solvent is preferably a mixed solvent of a non-polar solvent and water, or a single solvent of water. The proportion of water in the mixed solvent of the non-polar solvent and water is preferably 50% to 80% by weight. The single solvent of water means that solely water is used as the solvent.

The water-containing solvent for dispersing the electrode composition is preferably a mixed solvent of water and toluene or a mixed solvent of water and xylene from the viewpoint of metal ion extraction efficiency.

The solid content concentration in the electrode active material dispersion liquid is not particularly limited; however, it is preferably 50% by weight or less. In a case where the solid content concentration in the electrode active material dispersion liquid exceeds 50% by weight, the proportion of the solvent in the electrode active material dispersion liquid decreases, and the extraction rate of metal ions after the pH adjustment step may decrease.

The electrode active material dispersion liquid may contain a solid component other than the electrode composition. Examples of the solid component other than the electrode composition include a current collector, a separator, and a battery exterior body. It is desirable that these solid components are separated before the pH adjustment step. Examples of the method of separating solid components include separation using specific gravity, filtration, and centrifugation.

### [pH Adjustment Step]

In the pH adjustment step, the pH of the electrode active material dispersion liquid is adjusted so that the hydrogen ion exponent (pH) of the aqueous solution fractionated from the electrode active material dispersion liquid obtained in the dispersion liquid adjustment step at 25° C. is 5 or less. It is noted that the fractionated aqueous solution refers to a solution obtained by isolating a part or all of the electrode active material dispersion liquid and removing a solvent other than the water.

The pH of the aqueous solution at 25° C., adjusted by the pH adjustment step, is preferably 3 or more and 5 or less. Examples of the method of adjusting the pH of the aqueous solution to 5 or less include a method of mixing an electrode active material dispersion liquid with an acid agent. Examples of the acid agent include sulfuric acid, hydrochloric acid, nitric acid, citric acid, and gluconic acid, succinic acid, and two or more kinds of them may be used in combination. The acid agent is preferably sulfuric acid.

The pH of the aqueous solution can be measured using a commercially available pH meter. The method of separating the aqueous solution from the electrode active material dispersion liquid is not particularly limited; however, examples thereof include a method in which known separation methods such as filtration, centrifugation, static separation, and adsorption separation are appropriately combined. Here, the aqueous solution is separated not in a state of pure water but in a state of containing a solute. That is, a method for separating high-purity water from the electrode active material dispersion liquid, such as distillation and a method of using an ion exchange resin, is not adopted.

In a case of adjusting the pH of the electrode active material dispersion liquid, acid may be added little by little to the electrode active material dispersion liquid, the electrode active material dispersion liquid may be added little by little to the acid agent, or the electrode active material dispersion liquid may be mixed with a predetermined amount of the acid agent at one time.

The time required for the pH adjustment step is not particularly limited; however, it is preferably 1 to 3 hours.

The temperature of the electrode active material dispersion liquid in the pH adjustment step is not particularly limited; however, it is preferably 10° C. or higher.

In the pH adjustment step, the electrode active material dispersion liquid may be stirred, or the electrode active material dispersion liquid may be irradiated with ultrasonic waves.

The metal ion solution produced by the production method for a metal ion solution of the present invention can be used for producing of an active material for a lithium-ion battery, a catalyst for a chemical reaction, and the like.

Examples of the metal ion contained in the metal ion solution include a lithium-ion, a nickel ion, a cobalt ion, a manganese ion, an iron ion, an aluminum ion, a vanadium ion, a molybdenum ion, and a titanium ion.

### [Lithium-ion Battery]

One embodiment of the lithium-ion battery of the present invention is a lithium-ion battery characterized by including a charge storage element consisting of a first electrode that has a first resin current collector and has a first electrode active material layer formed on the first resin current collector and consisting of a first electrode composition containing a first electrode active material, a second electrode that has a second resin current collector and has a second electrode active material layer formed on the second resin current collector and consisting of a second electrode composition containing a second electrode active material, and a separator disposed between the first electrode active material layer and the second electrode active material layer, in which the first resin current collector contains a first matrix resin and a first conductive filler, the second resin current collector contains a second matrix resin and a second conductive filler, a melting point of the first matrix resin is less than 200° C., and a melting point of the second matrix resin is higher than the melting point of the first matrix resin by 30° C. or higher.

In one embodiment of the lithium-ion battery of the present invention, the first resin current collector contains a first matrix resin and a first conductive filler, the second resin current collector contains a second matrix resin and a second conductive filler, a melting point of the first matrix resin is less than 200° C., and a melting point of the second matrix resin is higher than the melting point of the first matrix resin by 30° C. or higher. As a result, in a case where in the isolation step, the charge storage element is heated at a temperature equal to or higher than the melting point of the first matrix resin and lower than 200° C., at least a part of the first resin current collector can be removed, and a first electrode composition can be selectively isolated to the outside. As a result, one embodiment of the lithium-ion battery of the present invention is suitable as a lithium-ion battery that is used in the production method for a recyclable electrode active material for a lithium-ion battery of the present invention.

The second embodiment of the lithium-ion battery is a lithium-ion battery characterized by having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer, in which the first current collector and the separator are adhered to each other with the first sealing material being sandwiched therebetween at an outer peripheral edge portion on which the first electrode active material layer is not formed, the second electrode current collector and the separator are adhered to each other with the second sealing material being sandwiched therebetween at an outer peripheral edge portion on which the second electrode active material layer is not formed, and the SP value and the Tg of each of the first sealing material and the second sealing material respectively satisfy the following conditions (1) and (2).
Condition (1): [the absolute value of the difference between the SP value of the resin constituting the first sealing material and the SP value of the resin constituting the second sealing material]>3.5
Condition (2): [the absolute value of the difference between the Tg of the resin constituting the first sealing material and the Tg of the resin constituting the second sealing material]≥35

In the second embodiment of the lithium-ion battery, the SP value and the Tg of each of the first sealing material and the second sealing material respectively satisfy all of the above conditions. As a result, in a case where the charge storage element is immersed in a solvent, where the difference between the SP value of the solvent and the SP value of the resin constituting the first sealing material is less than 1.0 and the difference between the SP value of the solvent and the SP value of the resin constituting the second sealing material is more than 2.5, the first sealing material is dissolved in the solvent to separate the first current collector from the separator with the first sealing material as a boundary, whereby the first electrode active material layer can be selectively isolated. As a result, the second embodiment of the lithium-ion battery of the present invention is suitable as a lithium-ion battery that is used in the production method for a recyclable electrode active material for a lithium-ion battery of the present invention.

### [Manufacturing Method for Lithium-ion Battery]

A lithium-ion battery can be manufactured by, for example, a step of preparing a first current collector, a step of forming a first electrode active material layer containing the first electrode active material on the first current collector to obtain a first electrode sheet-shaped member, a step of preparing a second current collector, a step of forming a second electrode active material layer containing the second electrode active material on the second current collector to obtain a second electrode sheet-shaped member, a step of adhering the first current collector and the separator with the first sealing material to cover the first electrode active material layer with the first current collector, the separator, and the first sealing material, and a step of adhering the second current collector and the separator with the second sealing material to cover the second electrode active material layer with the second current collector, the separator, and the second sealing material.

The method of adhering the first current collector and the separator with the first sealing material is not particularly limited; however, examples thereof include a method of applying a resin serving as the first sealing material onto the edge part of the separator to adhere the first current collector. In this case, the first electrode active material layer is made to be sandwiched between the separator and the first current collector. The same applies to the method of adhering the second current collector and the separator with the second sealing material.

### [Production method for recyclable sheet-shaped Electrode Member for Lithium-ion Battery]

The production method for a recyclable sheet-shaped electrode member for a lithium-ion battery, the lithium-ion battery having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer, in which the first current collector and the separator are adhered to each other with a first sealing material being sandwiched therebetween at an outer peripheral edge portion on which the first electrode active material layer is not formed, is characterized by including an isolation step of separating the first current collector and the separator with the first sealing material as a boundary, to isolate the first recyclable sheet-shaped electrode member including the first current collector and the first electrode active material layer from a lithium-ion battery.

In the production method for a recyclable sheet-shaped electrode member for a lithium-ion battery, the first current collector and the separator are separated, with the first sealing material as a boundary, to isolate the first recyclable sheet-shaped electrode member that contains the first current collector and the first electrode active material layer.

The production method for a recyclable sheet-shaped electrode member for a lithium-ion battery is the same as the above-described production method for a recyclable electrode active material for a lithium-ion battery, except that the object to be isolated by the isolation step is not the first electrode active material but the first recyclable sheet-shaped electrode member that contains the first current collector and the first electrode active material layer. As a result, in the production method for a recyclable electrode active material for a lithium-ion battery illustrated in FIG. 26, FIG. 27, and FIG. 28, the method of isolating the first recyclable sheet-shaped electrode member 110 containing the first regenerated sheet that includes the first current collector 11 and the first electrode active material layer 13 is the production method for a recyclable sheet-shaped electrode member for a lithium-ion battery.

### [Production Method for Recyclable Electrode Sheet for Lithium-ion Battery]

The production method for a recyclable electrode sheet for a lithium-ion battery, the lithium-ion battery having a charge storage element consisting of a first electrode that has a first current collector and has a first electrode active material layer formed on the first current collector and consisting of a first electrode composition containing a first electrode active material, a second electrode that has a second current collector and has a second electrode active material layer formed on the second current collector and consisting of a second electrode composition containing a second electrode active material, and a separator disposed between the first electrode active material layer and the second electrode active material layer, in which the first current collector and the separator are adhered to each other with a first sealing material being sandwiched therebetween at an outer peripheral edge portion on which the first electrode active material layer is not formed, and the second current collector and the separator are adhered to each other with a second sealing material being sandwiched therebetween at an outer peripheral edge portion on which the second electrode active material layer is not formed, is characterized by including an isolation step of separating the second current collector and the separator with the second sealing material as a boundary, to isolate the first recyclable electrode sheet consisting of the first current collector, the first electrode active material layer, the separator, and the first sealing material from the lithium-ion battery.

In the production method for a recyclable electrode sheet for a lithium-ion battery, the second current collector and the separator are separated with the second sealing material as a boundary. Since the second current collector and the separator are separated in the charge storage element, it is possible to isolate the first recyclable electrode sheet consisting of the first current collector, the first electrode active material layer, the separator, and the first sealing material. In the first recyclable electrode sheet, since the first electrode active material layer is covered by the first current collector, the first sealing material, and the separator, the first electrode active material does not leak to the outside. As a result, it is easy to suppress the mixing of the second electrode active material or the deactivation of the first electrode active material, and thus the above production method is excellent as a method of recycling or reusing a lithium-ion battery in a simple process.

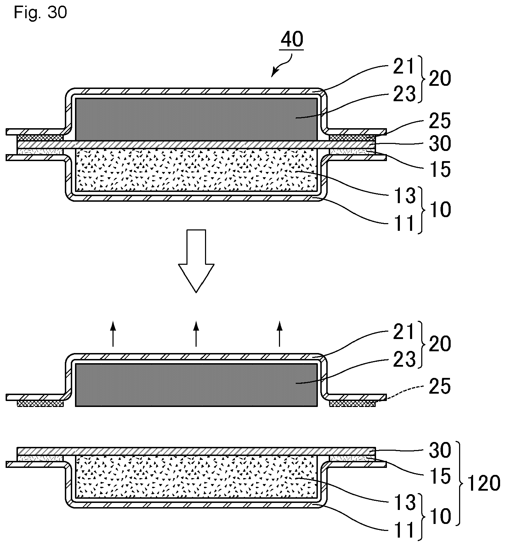

An example of the production method for a recyclable electrode sheet for a lithium-ion battery will be described with reference to FIG. 30. FIG. 30 is a cross-sectional view schematically illustrating an example of an isolation step in a production method for a recyclable electrode sheet for a lithium-ion battery. In FIG. 30, the second current collector 21 and the separator 30 are separated with the second sealing material 25 constituting the charge storage element 40 as a boundary. Since the second current collector 21 and the separator 30 are separated with the second sealing material 25 as a boundary, it is possible to obtain a first recyclable electrode sheet 120 consisting of the first current collector 11, the first electrode active material layer 13, the first sealing material 15, and the separator 30.

Examples of the method of separating the second current collector from the separator with the second sealing material as a boundary include a method obtained by applying, to the second sealing material, the method of separating the first current collector from the separator with the first sealing material as a boundary in the production method for a recyclable electrode active material for a lithium-ion battery. That is, examples of the method of separating the second current collector from the separator with the second sealing material as a boundary include a method of heating the charge storage element, a method of immersing the charge storage element in a solvent, or a method of cutting the second sealing material.

In a case where the charge storage element is heated in the isolation step, it is preferable for the isolation step to include a step of heating the charge storage element at a temperature equal to or higher than the melting point of the resin constituting the second sealing material and lower than the melting point of the resin constituting the first sealing material.

In a case where the charge storage element is immersed in a solvent in the isolation step, it is preferable that the isolation step includes a step of immersing the charge storage element in a solvent, the absolute value of the difference between the SP value of the resin constituting the second sealing material and the SP value of the solvent is 1.0 or less, and the absolute value of the difference between the SP value of the resin constituting the first sealing material and the SP value of the solvent more than 2.5 or less.

In a case where the second sealing material is cut in the isolation step, it is preferable for the isolation step to include a step of cutting the second sealing material along a direction substantially perpendicular to a direction in which the second current collector and the separator face each other.

The recyclable electrode sheet for a lithium-ion battery, which is produced by the production method for a recyclable electrode sheet for a lithium-ion battery, may be used again for manufacturing a lithium-ion battery by being combined with an electrode sheet having a different polarity.

In the production method for a recyclable electrode sheet for a lithium-ion battery, it is preferable to carry out the isolation step under the conditions in which the first electrode active material is not deactivated. In a case where the first electrode active material has been deactivated, it becomes difficult to reuse the recyclable electrode sheet for a lithium-ion battery obtained by the production method for a recyclable electrode sheet for a lithium-ion battery.

In order for the first electrode active material not to be deactivated, it is preferable not to bring the first electrode active material into contact with water. Further, the atmosphere in which the isolation step is carried out is preferably in a dry room environment with a dew point of -30° C. or lower.

The recyclable electrode sheet obtained by the production method for a recyclable electrode sheet for a lithium-ion battery has a constitution corresponding to a half battery of a lithium-ion battery, which has the first current collector, the first electrode active material layer, and the separator, and thus it is possible to manufacture a new lithium-ion battery by combining the recyclable electrode sheet with an electrode sheet having a different polarity.

Regarding the case of heating the charge storage element in the isolation step and the case of immersing the charge storage element in a solvent in the isolation step, the constitution of the lithium-ion battery that is used in the production method for a recyclable electrode sheet for a lithium-ion battery is preferably a constitution obtained by reversing the constitution of the first electrode and the second electrode in a lithium-ion battery that is used in the production method for a recyclable electrode active material for a lithium-ion battery and a lithium-ion battery that is used in the production method for a recyclable sheet-shaped electrode member for a lithium-ion battery. On the other hand, in a case where the second sealing material is cut in the isolation step, it is preferably the same constitution as those in a lithium-ion battery that is used in the production method for a recyclable electrode active material for a lithium-ion battery and a lithium-ion battery that is used in the production method for a recyclable sheet-shaped electrode member for a lithium-ion battery.

### [EXAMPLES]

Next, the present invention will be specifically described with reference to Examples; however, the present invention is not limited to Examples as long as the gist of the present invention is maintained. Unless otherwise specified, parts mean parts by weight and % means % by weight. Further, in the following Examples, the first electrode shall be a cathode, and the second electrode shall be an anode.

### [Production Example 1]

### < Preparation of Resin Current Collector>

65 parts of a resin [manufactured by Mitsui Chemicals, Inc., TPX (polymethylpentene), melting point: 235° C.], 30 parts of [DENKA BLACK Li-400, manufactured by Denka Company Limited], and 5 parts of a dispersing agent were melt-kneaded with a twin-screw extruder under the conditions of 190° C., 100 rpm, and a retention time of 5 minutes to obtain a material for a resin current collector. The obtained material for a resin current collector material was extruded from a T-die and rolled with a cooling roll of which the temperature was adjusted to 50° C. to obtain a resin current collector having a film thickness of 100 µm.

### [Production Example 2]

### [Preparation of Coated Cathode Active Material]

70.0 parts of DMF was placed in a four-necked flask equipped with a stirrer, a thermometer, a reflux condenser, a dropping funnel, and a nitrogen gas introduction tube, and the temperature was raised to 75° C. Next, a monomer blending solution obtained by blending 20.0 parts of butyl methacrylate, 55.0 parts of acrylic acid, 22.0 parts of methyl methacrylate, 3 parts of sodium allylsulfonate, and 20 parts of UMF, and an initiator solution obtained by dissolving 0.4 parts of 2,2'-azobis(2,4-dimethylvaleronitrile) and 0.8 parts of 2,2'-azobis(2-methylbutyronitrile) in 10.0 parts of DMF were continuously added dropwise to the four-necked flask over 2 hours under stirring by using a dropping funnel, while blowing nitrogen thereinto, to carry out radical polymerization. After completion of the dropwise addition, the temperature was raised to 80° C., and the reaction was continued for 5 hours to obtain a copolymer solution having a resin concentration of 50% by weight. The obtained copolymer solution was transferred to a Teflon (registered trade name) vat and dried under reduced pressure at 120° C. and 0.01 MPa for 3 hours to distill off DMF, whereby a macromolecule compound for coating was obtained. Subsequently, 100 parts of a cathode active material powder (LiNi_{0.8}Co_{0.15}Al_{0.05}O₂ powder, volume average particle size: 4 µm) was placed in an all-purpose mixer, High Speed Mixer FS25 [manufactured by EARTHTECHNICA Co., Ltd.], and at room temperature and in a state of the powder being stirred at 720 rpm, 11.2 parts of a macromolecule compound solution for coating obtained by dissolving the macromolecule compound for coating in isopropanol at a concentration of 1.0% by weight was added dropwise over 2 minutes, and then the resultant mixture was further stirred for 5 minutes. Next, in a state of the resultant mixture being stirred, 6.2 parts of acetylene black [DENKA BLACK (registered trade name) manufactured by Denka Company Limited] was divisionally added as a conducting agent in 2 minutes, and stirring was continued for 30 minutes. Then, the pressure was reduced to 0.01 MPa while maintaining the stirring, the temperature was subsequently raised to 140° C. while maintaining the stirring and the degree of pressure reduction, and the stirring, the degree of pressure reduction, and the temperature were maintained for 8 hours to distill off the volatile matter. The obtained powder was classified with a sieve having a mesh size of 212 µm to obtain a coated cathode active material.

### [Production Example 3]

### < Preparation of Coated Anode Active Material >

100 parts of non-graphitizable carbon powder (volume average particle size: 20 µm) which is a carbon-based material was placed in an all-purpose mixer, High Speed Mixer FS25 [manufactured by EARTHTECHNICA Co., Ltd.], and at room temperature and in a state of the powder being stirred at 720 rpm, 9.2 parts of a macromolecule compound solution for coating obtained by dissolving the macromolecule compound for coating in isopropanol at a concentration of 19.8% by weight was added dropwise over 2 minutes, and then the resultant mixture was further stirred for 5 minutes. Next, in a state of the resultant mixture being stirred, 11.3 parts of acetylene black [DENKA BLACK (registered trade name) manufactured by Denka Company Limited], which is a conducting agent, was divisionally added in 2 minutes, and stirring was continued for 30 minutes. Then, the pressure was reduced to 0.01 MPa while maintaining the stirring, the temperature was subsequently raised to 140° C. while maintaining the stirring and the degree of pressure reduction, and the stirring, the degree of pressure reduction, and the temperature were maintained for 8 hours to distill off the volatile matter. The obtained powder was classified with a sieve having a mesh size of 212 µm to obtain a coated anode active material.

### <Example 1 >

### < Preparation of First Electrode (Cathode)>

42 parts of an electrolytic solution prepared by dissolving LiN(FSO₂)₂ at a proportion of 2 mol/L in a mixed solvent (volume ratio 1:1) of ethylene carbonate (EC) and propylene carbonate (PC) and 4.2 parts of a carbon fiber [manufactured by Osaka Gas Chemicals Co., Ltd., Donna Carbo Milled S-243] were mixed using a planetary stirring type mixing and kneading device {Awatori Rentaro [THINKY Corporation]} at 2,000 rpm for 7 minutes, subsequently 30 parts of the electrolytic solution and 206 parts of the coated cathode active material were added, and then mixing was further carried out at 2,000 rpm for 1.5 minutes with Awatori Rentaro. Then, after 20 parts of the electrolytic solution was further added, stirring with Awatori Rentaro was carried out at 2,000 rpm for 1 minute, and after 2.3 parts of the electrolytic solution was further added, stirring with Awatori Rentaro was carried out for mixing at 2,000 rpm for 1.5 minutes, whereby a cathode active material slurry was prepared. The obtained cathode active material slurry was applied onto the surface of the resin current collector obtained in Production Example 1, which serves the first current collector, and pressed at a pressure of 5 MPa for about 10 seconds to prepare a sheet-shaped cathode member for a lithium-ion battery (42 mm×42 mm) according to Example 1. It is noted that in the sheet-shaped cathode member for a lithium-ion battery according to Example 1, a cathode active material layer having a plan view dimension of 35 mm×35 mm is disposed substantially in the center of the first current collector having a plan view dimension of 42 mm×42 mm.

### <Adhesion of First Current Collector and Separator with First Sealing Material>

An adhesive polyolefin film [manufactured by Mitsui Chemicals, Inc., ADMER (registered trade name) VE300, melting point 90° C., thickness 50 µm] which had been cut out to a width of 2 mm was disposed at the outer edge part of a flat plate-shaped cell guard 3501 [PP (melting point: 160° C.), thickness: 25 µm, plan view dimension: 42 mm×42 mm] that serves as a separator, superposed on the cathode active material layer of the cathode sheet-shaped member for a lithium-ion battery according to Example 1, and adhered to the first current collector and the separator.

### <Preparation of Second Electrode (Anode)>

20 parts of an electrolytic solution prepared by dissolving LiN(FSO₂)₂ at a proportion of 2 mol/L in a mixed solvent (volume ratio 1:1) of ethylene carbonate (EC) and propylene carbonate (PC) and 2 parts of a carbon fiber [manufactured by Osaka Gas Chemicals Co., Ltd., Donna Carbo Milled S-243] were mixed using a planetary stirring type mixing and kneading device {Awatori Rentaro [THINKY Corporation]} at 2,000 rpm for 7 minutes, subsequently 50 parts of the electrolytic solution and 98 parts of the coated anode active material were added, and then mixing was further carried out at 2,000 rpm for 1.5 minutes with Awatori Rentaro. Then, after 25 parts of the electrolytic solution was further added, stirring with Awatori Rentaro was carried out at 2,000 rpm for 1 minute, and moreover, after 50 parts of the electrolytic solution was further added, stirring with Awatori Rentaro was carried out for mixing at 2,000 rpm for 1.5 minutes, whereby an anode active material slurry was prepared.

### <Adhesion of Second Current Collector and Separator with Second Sealing Material>

The obtained anode active material slurry was applied onto a surface of an aramid separator and pressed at a pressure of 5 MPa for about 10 seconds to form an anode active material layer on a separator. After transferring this anode active material layer to a surface of the separator, which was not in contact with the cathode active material layer, a toluene solution of a saturated copolymer polyester having a high molecular weight (Nichigo POLYESTER (registered trade name) SP-181, melting point: 140° C., manufactured by Nippon Synthetic Chemical Industry Co., Ltd.) was applied onto a region of a width of 2 mm of the outer edge part of the separator and the solvent was removed. Then, the anode active material layer was superposed on the resin current collector obtained in Production Example 1, which serves as the second current collector, adhered to the second current collector and the separator, and then enclosed in an aluminum laminated film to obtain a lithium-ion battery according to Example 1. It is noted that the plan view dimension of the anode active material layer is a square of 35 mm×35 mm.

### <Checking of Isolation Properties of First Recyclable Electrode Active Material>

The aluminum laminated film was removed from the lithium-ion battery according to Example 1, and the charge storage element was immersed in a solvent (propylene carbonate) heated to a temperature (120° C.) higher than the melting point of the resin constituting the first sealing material by 30° C. for 10 minutes while applying vibration. Due to being immersed while applying vibration, the first sealing material was swollen and softened, and the first current collector and the separator were separated with the first sealing material as a boundary, whereby a dispersion liquid in which the first electrode active material was dispersed in the solvent was obtained. Those from which the first electrode active material could be isolated were evaluated as "∘". The results are shown in Table 1.

### [Evaluation of Selectivity]

It was checked whether the coated anode active material was contained in the above dispersion liquid, and then a case where the coated anode active material was not contained was evaluated as "∘" and a case where the coated anode active material was contained was evaluated as "x". The results are shown in Table 1.

### <Examples 2 to 4>

Lithium-ion batteries according to Examples 2 to 4 were prepared in the same procedure as Example 1, except that the kinds of the first sealing material and the second sealing material were changed as shown in Table 1. Then, the first electrode active material was isolated, and the selectivity thereof was evaluated. It is noted that the temperature of the solvent was set to the melting point of the resin constituting the first sealing material+30° C. The results are shown in Table 1. The kinds of resins shown in Table 1 are as follows.
A: ADMER (registered trade name) VE300 (an adhesive polyolefin, melting point: 90° C.), manufactured by Mitsui Chemicals, Inc.
B: Nichigo POLYESTER (registered trade name) SP-181 (saturated copolymer polyester having high molecular weight, melting point: 140° C.), manufactured by Nippon Synthetic Chemical Industry Co., Ltd.
C: Modic (registered trade name) F502 (adhesive polyolefin, melting point: 70° C.), manufactured by Mitsubishi Chemical Corporation

**[Table 1]**

| | | Example 1 | Example 2 | Example 3 | Example 4 |
|---|---|---|---|---|---|
| First sealing material | Sealing material Melting point (°C.) | A | C | C | A |
| | | 90 | 70 | 70 | 90 |
| Second sealing material | Sealing material Melting point (°C.) | B | B | A | A |
| | | 140 | 140 | 90 | 90 |
| Heating conditions | Temperature (°C.) | 120 | 100 | 100 | 120 |
| | Time (min) | 10 | 10 | 10 | 10 |
| Isolation property | | ○ | ○ | ○ | ○ |
| Selectivity | | ○ | ○ | x | x |

### <Example 5>

A lithium-ion battery according to Example 5 was prepared, where the first sealing material and the second sealing material were respectively the same as those in Example 2. The aluminum laminated film was removed from the lithium-ion battery to isolate the charge storage element, the first sealing material present at the outer peripheral edge portion was cut along a direction substantially perpendicular to a direction in which the first current collector and the separator face each other, and the first sealing material was divided into two substantially equal parts in a direction in which the first current collector and the separator faced each other. The first current collector and the separator were separated with the first sealing material as a boundary to obtain the first recyclable sheet-shaped electrode member having the first electrode active material layer formed on the first current collector. Further, the first electrode active material was scraped off from the first recyclable sheet-shaped electrode member using a squeegee and recovered in a glass container to obtain the first electrode active material, which is the recyclable electrode active material. It was confirmed that the second electrode active material is not contained in the first electrode active material.

### <Example 6>

A lithium-ion battery according to Example 6 was prepared, where the first sealing material and the second sealing material were respectively the same as those in Example 2. The aluminum laminated film was removed from the lithium-ion battery to isolate the charge storage element, and the second sealing material present at the outer peripheral edge portion was cut, whereby the second current collector and the separator were separated with the second sealing material as a boundary. Since the second electrode active material layer was formed on the second current collector, the charge storage element was separated into the second recyclable sheet-shaped electrode member consisting of the second current collector and the second electrode active material layer and the first recyclable electrode sheet consisting of the first current collector, the first electrode active material, the separator, and the first sealing material, with the second sealing material as a boundary. In Example 6, all of the steps of removing the aluminum laminated film, cutting the second sealing material, and the like were carried out in a dry room environment with a dew point of -30° C. or lower. Further, the first recyclable electrode sheet was disassembled to isolate the first electrode active material, and then it was confirmed that the second electrode active material is not mixed and that the first electrode active material is deactivated by water.

As shown in the results of Table 1, a cathode active material, which is the recyclable electrode active material, can be obtained by the production method for recyclable electrode active material for a lithium-ion battery of each of Examples in a simple process without requiring high temperature heating. In addition, from the results of Examples 1 to 2, it was confirmed that in a case where the melting point of the resin constituting the second sealing material is higher than the melting point of the resin constituting the first sealing material by 30° C. or higher, a cathode active material can be obtained in a state where the anode active material is not mixed, and thus the selectivity is good. Further, from the results of Example 5, it was confirmed that in a case where the first current collector and the separator are separated with the first sealing material as a boundary, a cathode active material can be obtained in a state where the anode active material is not mixed, and thus selectivity is good. In addition, from the results of Example 5, it was found that the lithium-ion battery of each of Examples is suitable in the production method for a recyclable electrode active material for a lithium-ion battery and the production method for a recyclable sheet-shaped electrode member for a lithium-ion battery, which are described in the present specification. Further, from the results of Example 6, it was confirmed that in a case where the second sealing material is cut, it is possible to obtain the first recyclable electrode sheet in which the second electrode active material is not mixed and which contains the first cathode active material that is not deactivated by moisture. In addition, from the results of Example 6, it was found that in a case where the production method for a recyclable electrode sheet for a lithium-ion battery described in the present specification is used, it is possible to produce a recyclable electrode sheet for a lithium-ion battery without the first electrode active material being deactivated. Further, it was found that lithium-ion batteries manufactured in Examples are suitable for executing the production method for a recyclable electrode active material for a lithium-ion battery according to this invention.

### Industrial Applicability

This invention is applicable to a recycling of lithium contained in a lithium-ion battery. Also, said variations may be applicable to a vehicle seat of an airplane and so on. Also, the production method for a recyclable electrode active material for a lithium-ion battery according to said variation can be useful as a method of collecting an electrode active material from a lithium-ion battery. The production method for a solution containing a metal ion according to said variation can be useful as a method of recycling valuable metals contained in a lithium-ion battery. The lithium-ion battery according to said variation is available as a lithium-ion battery used for a mobile phone, a personal computer, a hybrid vehicle, or an electric vehicle. The production method for a recyclable sheet-shaped electrode member for a lithium-ion battery is useful as a method of collecting an electrode active material from a lithium-ion battery. The production method for a recyclable electrode sheet for a lithium-ion battery is useful as a method for collecting and reusing an electrode active material from a lithium-ion battery.

### Reference Signs List

10: recycling facility of a lithium-ion battery
12,40,50,60,70: discharging device
14: disassembling device
16: collecting device
18: lithium-ion battery
20: cathode
22: anode
24: first load
26: second load
28,52: switch
30: voltmeter
32: control unit
42: variable resistance load
62: first discharging device
64: second discharging device
72: first discharge tank
74: second discharge tank
82: discharge tank
84: liquid supply device
86: control valve
S102: first discharging step
S104: second discharging step
S106: disassembling step
S108: collecting step
110,150,160,170: vehicle seat
112: cushion pad (seat pad)
114: lithium-ion battery module
114A, 114B: terminal
116: lithium-ion battery
118: exterior film
120, 162: housing space
122: back pad (seat pad)
124: cathode current collector
126: cathode active material layer
128: separator
130: anode active material layer
132: anode current collector
134: frame member
136: core
138: mold
152: elastic auxiliary member
S1102: lithium-ion battery module preparation step
S1104: foaming step
S1106: housing step
1: lithium-ion battery
10: first electrode
11: first current collector
13: first electrode active material layer
14: recyclable electrode active material
15: first sealing material
20: second electrode
21: second current collector
23: second electrode active material layer
25: second sealing material
30: separator
40: charge storage element
50: battery exterior body
60: solvent
90: squeegee
110: recyclable sheet-shaped electrode member
120: recyclable electrode sheet

## Claims

1. A recycling method for a lithium-ion battery comprising:
a first discharging step, which increases an amount of lithium included in a cathode active material by discharging the lithium-ion battery via a load with a first resistance value;
a second discharging step, which further increases the amount of lithium included in the cathode active material by discharging the lithium-ion battery via a load with a second resistance value lower than the first resistance value; and
a collecting step, which collects the cathode active material from the lithium-ion battery after the second discharging step.

2. The recycling method for a lithium-ion battery according to claim 1,
wherein a first load with a first resistance value is used in the first discharging step; and
wherein a second load with a second resistance value, which is lower than the first resistance value, is used in the second discharging step.

3. The recycling method for a lithium-ion battery according to claim 2,
wherein the lithium-ion battery is discharged while the first load and the second load are connected to the lithium-ion battery parallelly during a switch from the first discharging step to the second discharging step.

4. The recycling method for a lithium-ion battery according to claim 1,
wherein the load is a variable resistance load; and
wherein a resistance value of the variable resistance load is adjusted to lower the resistance value of the variable resistance load in the second discharging step than the resistance value of the variable resistance load in the first discharging step.

5. A vehicle seat comprising:
a seat pad, which is made of foamed resin, to sustain a seated person elastically; and
a lithium-ion battery module, which includes a lithium-ion battery obtained from a recycling method for a lithium-ion battery mentioned in claim 1;
wherein the lithium-ion battery comprises a cathode active material layer including a cathode active material collected by the recycling method;
wherein the lithium-ion battery module is flexible having a resin exterior film covering the lithium-ion battery;
wherein the seat pad contains a housing space to house the lithium-ion battery module inside; and
wherein the lithium-ion battery module is housed in the housing space of the seat pad while being in contact with an inner surface of the housing space.

6. The vehicle seat according to claim 5,
wherein a resonance frequency value of the seat pad with a built-in battery is 3.4 Hz or less; and
wherein the lithium-ion battery module is housed in the housing space of the seat pad.

7. The vehicle seat according to claim 5,
wherein the lithium-ion battery module is housed in the housing space of the seat pad so as to deform with a deformation of the seat pad by seating.

8. The vehicle seat according to one of claims 5 to 7,
wherein the lithium-ion battery module is a sheet or a plate; and
wherein the housing space of the seat pad is formed along a surface facing a seated person.

9. The vehicle seat according to claim 8,
wherein both sides of the lithium-ion battery module are in contact with an inner surface of the housing space.

10. The vehicle seat according to claim 8,
wherein the vehicle seat further comprises an elastic auxiliary member, which is placed on one side of the lithium-ion battery module.

11. A method of manufacturing a vehicle seat,
wherein the vehicle seat comprising:
a seat pad, which is made of foamed resin, to sustain a seated person elastically; and
a lithium-ion battery module, which includes a lithium-ion battery obtained from a recycling method for a lithium-ion battery mentioned in claim 1,
wherein the lithium-ion battery comprises a cathode active material layer including a cathode active material collected by the recycling method, the method of manufacturing a vehicle seat comprising:
a lithium-ion battery module preparation step of preparing the lithium-ion battery module, which is flexible having a resin exterior film covering the lithium-ion battery as the lithium-ion battery module;
a foaming step of foaming the seat pad to form a housing space, which houses the lithium-ion battery module, inside the seat pad by placing an outer core corresponding to an external shape of the lithium-ion battery module in a mold; and
a housing step of housing the lithium-ion battery module in the housing space of the seat pad while being in contact with an inner surface of the housing space.

12. A method of manufacturing a vehicle seat,
wherein the vehicle seat comprising:
a seat pad, which is made of foamed resin, to sustain a seated person elastically; and
a lithium-ion battery module, which includes a lithium-ion battery obtained from a recycling method for a lithium-ion battery mentioned in claim 1,
wherein the lithium-ion battery comprises a cathode active material layer including a cathode active material collected by the recycling method, the method of manufacturing a vehicle seat comprising:
a lithium-ion battery module preparation step of preparing the lithium-ion battery module, which is a flexible having a resin exterior film covering the lithium-ion battery, as the lithium-ion battery module; and
a foaming step of foaming the seat pad so as to form a housing space to house the lithium-ion battery module inside the seat pad, and so as to house the lithium-ion battery module in the housing space of the seat pad while being in contact with an inner surface of the housing space by placing the lithium-ion battery module in a mold.

13. A recycling facility of a lithium-ion battery, comprising:
a discharging device, which is operable to carry out a first discharging step, which increases an amount of lithium included in a cathode active material by discharging the lithium-ion battery via a load with a first resistance value, and which is operable to carry out a second discharging step, which further increases the amount of lithium included in the cathode active material by discharging the lithium-ion battery via a load with a second resistance value lower than the first resistance value; and
a collecting device to collect the cathode active material from the lithium-ion battery.

14. The recycling facility of a lithium-ion battery according to claim 13, wherein the discharging device comprises a first load with a first resistance value used in the first discharging step and a second load with a second resistance value, which is lower than the first resistance value, used in the second discharging step.

15. The recycling facility of a lithium-ion battery according to claim 14, wherein the discharging device is configured to discharge the lithium-ion battery while the first load and the second load are connected to the lithium-ion battery parallelly during a switch from the first discharging step to the second discharging step.

16. The recycling facility of a lithium-ion battery according to claim 13, wherein the load is a variable resistance load; and
wherein the discharging device comprises a control unit, which is configured to adjust the resistance value of the variable resistance load to lower the resistance value of the variable resistance load in the second discharging step than the resistance value of the variable resistance load in the first discharging step.

17. A vehicle seat comprising:
a seat pad, which is made of foamed resin, to sustain a seated person elastically; and
a lithium-ion battery module, which includes a lithium-ion battery obtained at a recycling facility of a lithium-ion battery mentioned in claim 13;
wherein the lithium-ion battery comprises a cathode active material layer including a cathode active material collected by the recycling method;
wherein the lithium-ion battery module is flexible having a resin exterior film covering the lithium-ion battery;
wherein the seat pad contains a housing space to house the lithium-ion battery module inside; and
wherein the lithium-ion battery module is housed in the housing space of the seat pad while being in contact with an inner surface of the housing space.

18. The vehicle seat according to claim 17,
wherein a resonance frequency value of the seat pad with a built-in battery is 3.4 Hz or less; and
wherein the lithium-ion battery module is housed in the housing space of the seat pad.

19. The vehicle seat according to claim 17,
wherein the lithium-ion battery module is housed in the housing space of the seat pad so as to deform with a deformation of the seat pad by seating.

20. The vehicle seat according to one of claims 17 to 19,
wherein the lithium-ion battery module is a sheet or a plate; and
wherein the housing space of the seat pad is formed along a surface facing a seated person.

21. The vehicle seat according to claim 20,
wherein both sides of the lithium-ion battery module are in contact with an inner surface of the housing space.

22. The vehicle seat according to claim 20,
wherein the vehicle seat further comprises an elastic auxiliary member, which is placed on one side of the lithium-ion battery module.

23. A method of manufacturing a vehicle seat,
wherein the vehicle seat comprising:
a seat pad, which is made of foamed resin, to sustain a seated person elastically; and
a lithium-ion battery module, which includes a lithium-ion battery obtained at a recycling facility of a lithium-ion battery mentioned in claim 13,
wherein the lithium-ion battery comprises a cathode active material layer including a cathode active material collected by the recycling method, the method of manufacturing a vehicle seat comprising:
a lithium-ion battery module preparation step of preparing the lithium-ion battery module, which is flexible having a resin exterior film covering the lithium-ion battery as the lithium-ion battery module;
a foaming step of foaming the seat pad to form a housing space, which houses the lithium-ion battery module, inside the seat pad by placing an outer core corresponding to an external shape of the lithium-ion battery module in a mold; and
a housing step of housing the lithium-ion battery module in the housing space of the seat pad while being in contact with an inner surface of the housing space.

24. A method of manufacturing a vehicle seat,
wherein the vehicle seat comprising:
a seat pad, which is made of foamed resin, to sustain a seated person elastically; and
a lithium-ion battery module, which includes a lithium-ion battery obtained at a recycling facility of a lithium-ion battery mentioned in claim 13,
wherein the lithium-ion battery comprises a cathode active material layer including a cathode active material collected by the recycling method, the method of manufacturing a vehicle seat comprising:
a lithium-ion battery module preparation step of preparing the lithium-ion battery module, which is a flexible having a resin exterior film covering the lithium-ion battery, as the lithium-ion battery module; and
a foaming step of foaming the seat pad so as to form a housing space to house the lithium-ion battery module inside the seat pad, and so as to house the lithium-ion battery module in the housing space of the seat pad while being in contact with an inner surface of the housing space by placing the lithium-ion battery module in a mold.
